# FASCICULE DE BREVET EUROPEEN

(11) **EP 1 212 678 B1**
(45) Date de publication et mention de la délivrance du brevet: **22.10.2003**
(21) Numéro de dépôt: 00958714.8
(22) Date de dépôt: 21.08.2000
(51) Int. Cl.: G06F 9/445, G06F 9/45

(54) **PROTOCOLE DE GESTION, PROCEDE DE VERIFICATION ET DE TRANSFORMATION D'UN FRAGMENT DE PROGRAMME TELECHARGE ET SYSTEMES CORRESPONDANTS**
VERWALTUNGSPROTOKOLL, VERIFIKATIONSVERFAHREN UND TRANSFORMIERUNG EINES FERNGELADENEN PROGRAMMFRAGMENTS UND KORRESPONDIERENDE SYSTEME
MANAGEMENT PROTOCOL, METHOD FOR VERIFYING AND TRANSFORMING A DOWNLOADED PROGRAMME FRAGMENT AND CORRESPONDING SYSTEMS

(30) Priorité: 23.08.1999 FR 9910697
(43) Date de publication de la demande: 12.06.2002
(73) Titulaire: Trusted Logic, 78000 Versailles (FR)
(72) Inventeur: LEROY, Xavier, F-78000 Versailles (FR)
(74) Mandataire: Loisel, Bertrand
(86) Numéro de dépôt international: FR0002349
(87) Numéro de publication internationale: WO01014958

(56) Documents cités:
- US-A- 5 740 441
- GOSLING J ET AL: "THE JAVATM LANGUAGE SPECIFICATION" , JAVA LANGUAGE SPECIFICATION,XX,XX, PAGE(S) 215-236 XP002042923 page 218, ligne 10 -page 220, ligne 35
- GONG L ET AL: "Going beyond the sandbox: an overview of the new security architecture in the JavaDevelopment Kit 1.2" , PROCEEDINGS OF THE USENIX SYMPOSIUM ON INTERNET TECHNOLOGIES AND SYSTEMS XP002100907 page 107, colonne de droite, ligne 1 -page 108, colonne de gauche, ligne 3
- GUTHERY: "JAVA CARD: Internet Computing on a Smart Card" IEEE INTERNET COMPUTING,US,IEEE SERVICE CENTER, PISCATAWAY, NJ, 1 février 1997 (1997-02-01), pages 57-59, XP002077647 ISSN: 1089-7801

## Description

L'invention concerne un protocole de gestion, un procédé de vérification, un procédé de transformation d'un fragment de programme téléchargé et les systèmes correspondants, plus particulièrement destinés aux systèmes informatiques embarqués disposant de faibles ressources en mémoire et en puissance de calcul.

D'une manière générale, en référence à la figure la, on rappelle que les systèmes informatiques embarqués 10 comportent un microprocesseur 11, une mémoire permanente, telle qu'une mémoire non inscriptible 12 contenant le code du programme exécutable, une mémoire permanente, non volatile, réinscriptible 13 de type EEPROM contenant les données stockées dans le système, une mémoire vive, volatile, 14 dans laquelle le programme stocke ses résultats intermédiaires pendant son exécution, et des dispositifs d'entrée/sortie 15 permettant au système d'interagir avec son environnement. Dans le cas où le système informatique embarqué est constitué par une carte à microprocesseur, du type carte bancaire, le dispositif d'entrée/sortie 15 consiste en une liaison série permettant à la carte de communiquer avec un terminal, tel qu'un terminal lecteur de cartes.

Dans les systèmes informatiques embarqués classiques, le code du programme exécuté par le système est figé lors de la construction du système, ou, au plus tard, lors de la personnalisation de ce dernier avant livraison à l'utilisateur final.

Des systèmes informatiques embarqués plus évolués ont toutefois été mis en oeuvre, ces systèmes étant reprogrammables, comme par exemple les cartes à microprocesseur de type JavaCard. Ces systèmes reprogrammables ajoutent, vis-à-vis des précédents, la possibilité d'enrichir le programme après la mise en service du système, par une opération de téléchargement de fragments de programmes. Ces fragments de programmes, communément désignés par *"applets"* en langage anglo-saxon, seront indifféremment désignés par appliquettes ou fragments de programmes dans la présente description. Pour une description plus détaillée des systèmes JavaCard, on pourra utilement se reporter à la documentation éditée par la société SUN MICROSYSTEMS INC. Et en particulier à la documentation disponible électroniquement, chapitre JavaCard technology sur le site W.W.W. (*World Wide Web)* http://java.sun.com/products/javacard/index.html, juin 1999.

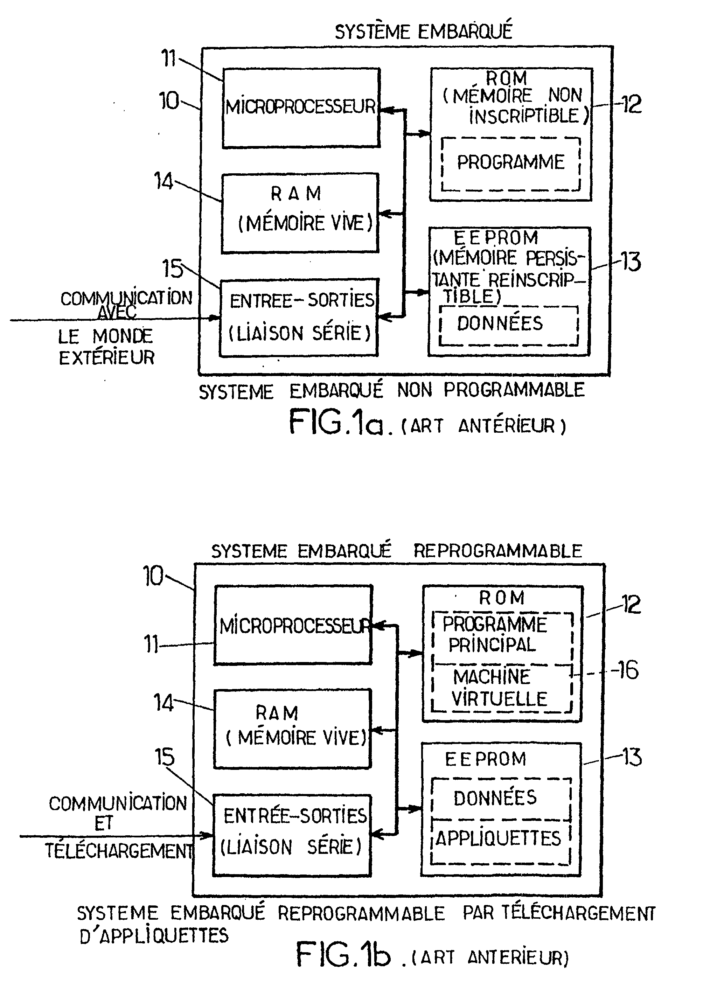

La figure 1b ilustre l'architecture d'un tel système informatique embarqué reprogrammable. Cette architecture est semblable à celle d'un système embarqué classique, à la différence que le système embarqué reprogrammable peut en outre recevoir des appliquettes par l'intermédiaire d'un de ses dispositifs d'entrée/sortie, puis stocker ces dernières dans sa mémoire permanente 13 à partir de laquelle elles peuvent ensuite être exécutées en complément du programme principal.

Pour des raisons de portabilité entre différents systèmes informatiques embarqués, les appliquettes se présentent sous forme de code pour une machine virtuelle standard. Ce code n'est pas directement exécutable par le microprocesseur 11 mais doit être interprété de manière logicielle par une machine virtuelle 16, laquelle est constituée par un programme résidant en mémoire permanente non inscriptible 12. Dans l'exemple précité des cartes JavaCard, la machine virtuelle utilisée est un sous-ensemble de la machine virtuelle Java. Pour une description des spécifications relatives à la machine virtuelle Java et de la machine virtuelle utilisée, on pourra utilement se reporter à l'ouvrage publié par Tim LINDHOLM et Frank YELLIN, intitulé *"The Java Virtual Machine Specification",* Addison-Wesley 1996, et à la documentation éditée par la société SUN MICROSYSTEMS INC. *"JavaCard 2.1 Virtual Machine Specification"*, documentation disponible électroniquement sur le site W.W.W. http://java.sun.com/products/javacard/JCVMSpec.pdf, mars 1999.

L'opération de téléchargement d'appliquettes sur un système informatique embarqué en service pose d'importants problèmes de sécurité. Une appliquette involontairement, voire volontairement, mal écrite peut modifier de manière incorrecte des données présentes sur le système, empêcher le programme principal de s'exécuter correctement ou en temps voulu, ou encore modifier d'autres appliquettes téléchargées antérieurement, en rendant celles-ci inutilisables ou nuisibles.

Une appliquette écrite par un pirate informatique peut également divulguer des informations confidentielles stockées dans le système, informations telles que le code d'accès dans le cas d'une carte bancaire par exemple.

A l'heure actuelle, trois solutions ont été proposées en vue de remédier au problème de sécurité des appliquettes.

Une première solution consiste à utiliser des signatures cryptographiques afin de n'accepter que des appliquettes provenant de personnes ou d'organismes de confiance.
Dans l'exemple d'une carte bancaire précité, seules les appliquettes portant la signature cryptographique de la banque ayant émis la carte sont acceptées et exécutées par la carte, toute autre appliquette non signée étant rejetée au cours de l'opération de téléchargement. Un utilisateur mal intentionné de la carte, ne disposant pas de clés de chiffrement de la banque, sera donc dans l'incapacité de faire exécuter une appliquette non signée et dangereuse sur la carte.
Cette première solution est bien adaptée au cas où toutes les appliquettes proviennent d'une même source unique, la banque dans l'exemple précité. Cette solution est difficilement applicable au cas où les appliquettes proviennent de plusieurs sources, comme, dans l'exemple d'une carte bancaire, le fabricant de la carte, la banque, les organismes gestionnaires des services par carte bancaire, les grands organismes de distribution commerciale offrant à la clientèle des programmes de fidélisation et proposant, légitimement, de télécharger des appliquettes spécifiques sur la carte. Le partage et la détention entre ces divers acteurs économiques des clés de chiffrement nécessaires à la signature électronique des appliquettes posent des problèmes techniques, économiques et juridiques majeurs.

Une deuxième solution consiste à effectuer des contrôles dynamiques d'accès et de typage pendant l'exécution des appliquettes.
Dans cette solution, la machine virtuelle lors de l'exécution des appliquettes, effectue un certain nombre de contrôles, tels que :
- contrôle d'accès à la mémoire : à chaque lecture ou écriture d'une zone mémoire, la machine virtuelle vérifie le droit d'accès de l'appliquette aux données correspondantes ;
- vérification dynamique des types de données : à chaque instruction de l'appliquette, la machine virtuelle vérifie que les contraintes sur les types de données sont satisfaites. A titre d'exemple, la machine virtuelle peut traiter spécialement les données telles que des adresses mémoire valides et empêcher que l'appliquette n'engendre des adresses mémoire invalides par l'intermédiaire de conversions entier/adresse ou d'opérations arithmétiques sur les adresses ;
- détection des débordements de pile et des accès illégaux dans la pile d'exécution de la machine virtuelle, lesquels, dans certaines conditions, sont susceptibles de perturber le fonctionnement de cette dernière, au point de contourner les mécanismes de contrôle précédents.
Cette deuxième solution permet l'exécution d'une large gamme d'appliquettes dans des conditions de sécurité satisfaisantes. Elle présente toutefois l'inconvénient d'un ralentissement considérable de l'exécution, provoqué par l'ensemble des vérifications dynamiques. Pour obtenir une réduction de ce ralentissement, une partie de ces vérifications peut être prise en charge par le microprocesseur lui-même, au prix toutefois d'une augmentation de la complexité de ce dernier et donc du prix de revient du système embarqué. De telles vérifications augmentent en outre les besoins en mémoire vive et permanente du système, en raison des informations supplémentaires de type qu'il est nécessaire d'associer aux données manipulées.

Une troisième solution consiste à effectuer une vérification statique du code de l'appliquette lors du téléchargement.
Dans cette solution, cette vérification statique simule l'exécution de l'appliquette au niveau des types de données et établit, une fois pour toutes, que le code de l'appliquette respecte la règle des types de données et de contrôle d'accès imposée par la machine virtuelle et ne provoque pas de débordement de pile. Si cette vérification statique réussit, l'appliquette peut alors être exécuté sans qu'il soit nécessaire de vérifier dynamiquement que cette règle est respectée. Dans le cas où le processus de vérification statique échoue, le système embarqué rejette l'"*appliquet*" et ne permet pas son exécution ultérieure. Pour une description plus détaillée de la troisième solution précitée, on pourra utilement se reporter à l'ouvrage édité par Tim LINDHOLM et Frank YELLIN précédemment cité, à l'article publié par James A.GOSLING intitulé *"Java Intermediate Byte Codes"*, Actes du ACM SIGPLAN, Workshop on Intermediate Representations (IR'95), pages 111-118, janvier 1995, et au brevet US 5,748,964 délivré le 05/05/1998.

Vis-à-vis de la deuxième solution, la troisième solution présente l'avantage d'une exécution des appliquettes beaucoup plus rapide, puisque la machine virtuelle n'effectue aucune vérification pendant l'exécution.
La troisième solution présente toutefois l'inconvénient d'un processus de vérification statique du code complexe et coûteux, tant en taille de code nécessaire pour conduire ce processus, qu'en taille de mémoire vive nécessaire pour contenir les résultats intermédiaires de la vérification, et qu'en temps de calcul. A titre d'exemple illustratif, la vérification de code intégré dans le système *Java JDK* commercialisé par SUN MICROSYSTEMS représente de l'ordre de 50 k-octets de code machine, et sa consommation en mémoire vive est proportionnelle à (Tp + Tr) xNb où Tp désigne l'espace maximum de pile, Tr désigne le nombre maximum de registres et Nb désigne le nombre maximum de cibles de branchements utilisées par un sous-programme, encore communément désigné par méthode, de l'appliquette. Ces besoins en mémoire dépassent largement les capacités des ressources de la majorité des systèmes informatiques embarqués actuels, notamment des cartes à microprocesseur commercialement disponibles.
Plusieurs variantes de la troisième solution ont été proposées, dans lesquelles l'éditeur de l'appliquette transmet au vérificateur, outre le code de l'appliquette, un certain nombre d'informations supplémentaires spécifiques telles que types de données précalculés ou preuve préétablie de typage de données correct. Pour une description plus détaillée des modes opératoires correspondants, on pourra utilement se reporter aux articles publiés par Eva ROSE et Kristoffer HØGSBRO ROSE, "*Lightweight Bytecode Vérification*", Actes du Workshop Formal Underspinning of Java, Octobre 1998, et par George C. NECULA, "*Proof-Carrying Code*", Actes du 24^{e} ACM Symposium Principles of Programming Languages, pages 106-119 respectivement.
Ces informations supplémentaires permettent de vérifier le code plus rapidement et de réduire légèrement la taille du code du programme de vérification mais ne permettent toutefois pas de réduire les besoins en mémoire vive, voire les augmentent, de manière très importante, dans le cas des informations de preuve préétablie de typage de données correct.

La présente invention a pour objet de remédier aux inconvénients précités de l'art antérieur.

En particulier, un objet de la présente invention est la mise en oeuvre d'un protocole de gestion d'un fragment de programme, ou appliquette, téléchargé permettant une exécution de ce dernier par un système informatique embarqué disposant de faibles ressources, tel qu'une carte à microprocesseur.

Un autre objet de la présente invention est également la mise en oeuvre d'un procédé de vérification d'un fragment de programme, ou appliquette, téléchargé dans lequel un processus de vérification statique du code de l'appliquette est conduit lors de son téléchargement, ce processus pouvant être rapproché, au moins dans son principe, de la troisième solution précédemment décrite, mais dans lequel des techniques nouvelles de vérification sont introduites, afin de permettre l'exécution de cette vérification dans les limites de valeurs de taille mémoire et de vitesse de calcul imposées par les cartes à microprocesseur et autres systèmes informatiques embarqués peu puissants.

Un autre objet de la présente invention est également la mise en oeuvre de procédés de transformation de fragments de programmes de type classique obtenus par exemple par la mise en oeuvre d'un compilateur *Java* en fragments de programmes, ou appliquettes, normalisés, satisfaisant a priori aux critères de vérification du procédé de vérification objet de l'invention, en vue d'accélérer le processus de vérification et d'exécution de ces derniers au niveau des systèmes informatiques embarqués ou cartes à microprocesseur actuels.

Un autre objet de la présente invention est, enfin, la réalisation de systèmes informatiques embarqués permettant la mise en oeuvre du protocole de gestion et du procédé de vérification d'un fragment de programme téléchargé précités ainsi que de systèmes informatiques permettant la mise en oeuvre des procédés de transformation de fragments de programmes, ou appliquettes, classiques en fragments de programmes, ou appliquettes, normalisés précités.

Le protocole de gestion d'un fragment de programme téléchargé sur un système embarqué reprogrammable, objet de la présente invention, s'applique notamment à une carte à microprocesseur munie d'une mémoire réinscriptible. Le fragment de programme est constitué par un code objet, suite d'instructions, exécutable par le microprocesseur du système embarqué par l'intermédiaire d'une machine virtuelle munie d'une pile d'exécution et de registres ou variables locales manipulées par ces instructions et permettant d'interpréter ce code objet. Le système embarqué est interconnecté à un terminal.
Il est remarquable en ce qu'il consiste au moins, au niveau du système embarqué, à détecter une commande de téléchargement du fragment de programme. Sur réponse positive à l'étape consistant à détecter une commande de téléchargement, il consiste en outre à lire le code objet constitutif du fragment de programme et à mémoriser temporairement ce code objet dans la mémoire réinscriptible. L'ensemble du code objet mémorisé est soumis à un processus de vérification instruction par instruction. Le processus de vérification consiste au moins en une étape d'initialisation de la pile des types et du tableau des types de registres représentant l'état de la machine virtuelle au début de l'exécution du code objet mémorisé temporairement et en une succession d'étapes de vérification instruction par instruction de l'existence, pour chaque instruction courante, d'une cible, cible d'instruction de branchement, cible d'un gestionnaire d'exceptions, et en une vérification et une actualisation de l'effet de l'instruction courante sur la pile des types et sur le tableau des types de registres. Dans le cas d'une vérification non réussie du code objet, le protocole objet de l'invention consiste à effacer le fragment de programme enregistré momentanément, en l'absence d'enregistrement de ce dernier dans le répertoire de fragments de programmes disponibles, et à adresser au lecteur un code d'erreur.

Le procédé de vérification d'un fragment de programme téléchargé sur un système embarqué, objet de l'invention, s'applique notamment à une carte à microprocesseur munie d'une mémoire réinscriptible. Le fragment de programme est constitué par un code objet et comporte au moins un sous-programme, suite d'instructions, exécutable par le microprocesseur du système embarqué par l'intermédiaire d'une machine virtuelle munie d'une pile d'exécution et de registres d'opérandes manipulés par ces instructions et permettant d'interpréter ce code objet. Le système embarqué est interconnecté à un lecteur.
Il est remarquable en ce que, suite à la détection d'une commande de téléchargement et à la mémorisation du code objet constitutif du fragment de programme dans la mémoire réinscriptible, il consiste, pour chaque sous-programme, à effectuer une étape d'initialisation de la pile des types et du tableau des types de registres par des données représentant l'état de la machine virtuelle au début de l'exécution du code objet mémorisé temporairement, à effectuer une vérification du code objet mémorisé temporairement instruction par instruction, par discrimination de l'existence, pour chaque instruction courante, d'une cible d'instruction de branchement, d'une cible d'un appel d'un gestionnaire d'exceptions ou d'une cible d'un appel de sous-routine et à effectuer une vérification et une actualisation de l'effet de l'instruction courante sur les types de données de la pile des types et du tableau des types de registres, en fonction de l'existence d'une cible d'instruction de branchement, d'une cible d'un appel de sous-routine ou d'une cible d'un appel de gestionnaire d'exceptions. La vérification est réussie lorsque le tableau des types de registres n'est pas modifié au cours d'une vérification de toutes les instructions, le processus de vérification étant poursuivi instruction par instruction jusqu'à ce que le tableau des types de registres soit stable, en l'absence de modification. Le processus de vérification est interrompu sinon.

Le procédé de transformation d'un code objet d'un fragment de programme en un code objet normalisé pour ce même fragment de programme, objet de la présente invention, s'applique à un code objet d'un fragment de programme dans lequel les opérandes de chaque instruction appartiennent aux types de données manipulées par cette instruction, la pile d'exécution ne présente pas de phénomène de débordement et pour chaque instruction de branchement le type des variables de la pile au niveau de ce branchement est le même qu'au niveau des cibles de ce branchement. Le code objet normalisé obtenu est tel que les opérandes de chaque instruction appartiennent aux types de données manipulées par cette instruction, la pile d'exécution ne présente pas de phénomène de débordement et la pile d'exécution est vide à chaque instruction de cible de branchement.
Il est remarquable en ce qu'il consiste, pour l'ensemble des instructions du code objet, à annoter chaque instruction courante par le type de données de la pile d'exécution avant et après l'exécution de cette instruction, les données d'annotation étant calculées au moyen d'une analyse du flot des données relatif à cette instruction, à détecter au sein des instructions, et de chaque instruction courante, l'existence de branchements pour lesquels la pile d'exécution n'est pas vide, l'opération de détection étant conduite à partir des données d'annotation du type de variables de pile allouées à chaque instruction courante. En présence d'une détection d'une pile d'exécution non vide, il consiste en outre à insérer des instructions de transfert des variables de pile de part et d'autre de ces branchements ou de ces cibles de branchement afin de vider le contenu de la pile d'exécution dans des registres temporaires avant ce branchement et de rétablir la pile d'exécution à partir des registres temporaires après ce branchement et à n'insérer aucune instruction de transfert sinon. Ce procédé permet ainsi d'obtenir un code objet normalisé pour ce même fragment de programme, dans lequel la pile d'exécution est vide à chaque instruction de branchement et de cible de branchement, en l'absence de toute modification de l'exécution du fragment de programme.

Le procédé de transformation d'un code objet d'un fragment de programme. en un code objet normalisé pour ce même fragment de programme, objet de la présente invention, s'applique, en outre, à un code objet d'un fragment de programme dans lequel les opérandes de chaque instruction appartiennent aux types de données manipulées par cette instruction, et un opérande de type déterminé écrit dans un registre par une instruction de ce code objet est relu depuis ce même registre par une autre instruction de ce code objet avec le même type de donnée déterminé. Le code objet normalisé obtenu est tel que les opérandes appartiennent aux types de données manipulées par cette instruction, un seul et même type de donnée étant alloué à un même registre dans tout le code objet normalisé.
Il est remarquable en ce qu'il consiste, pour l'ensemble des instructions du code objet, à annoter chaque instruction courante par le type de donnée des registres avant et après l'exécution de cette instruction, les données d'annotation étant calculées au moyen d'une analyse du flot des données relatif à cette instruction, et à effectuer une réallocation des registres d'origine employés avec des types différents, par division de ces registres d'origine en registres normalisés distincts. Un registre normalisé est alloué à chaque type de donnée utilisé. Une réactualisation des instructions qui manipulent les opérandes qui font appel aux registres normalisés est effectuée.

Le protocole de gestion d'un fragment de programme, le procédé de vérification d'un fragment de programme, les procédés de transformation de code objet de fragments de programmes en code objet normalisé et les systèmes correspondants, objets de la présente invention, trouvent application au développement des systèmes embarqués reprogrammables, tels que les cartes à microprocesseur, notamment dans l'environnement Java.

Il seront mieux compris à la lecture de la description et à l'observation des dessins ci-après, dans lesquels, outre les figures 1a et 1b relatives à l'art antérieur :
- la figure 2 représente un organigramme illustratif du protocole de gestion d'un fragment de programme téléchargé sur un système embarqué reprogrammable,
- la figure 3a représente, à titre illustratif, un organigramme d'un procédé de vérification d'un fragment de programme téléchargé conformément à l'objet de la présente invention,
- la figure 3b représente un diagramme illustratif des types de données et des relations de sous-typage mis en oeuvre par le procédé de gestion et le procédé de vérification d'un fragment de programme téléchargé, objet de la présente invention,
- la figure 3c représente un détail du procédé de vérification selon la figure 3a, relatif à la gestion d'une instruction de branchement,
- la figure 3d représente un détail du procédé de vérification selon la figure 3a, relatif à la gestion d'une instruction d'appel de sous-routine,
- la figure 3e représente un détail du procédé de vérification selon la figure 3a, relatif à la gestion d'une cible d'un gestionnaire d'exceptions,
- la figure 3f représente un détail du procédé de vérification selon la figure 3a, relatif à la gestion d'une cible de branchements incompatibles,
- la figure 3g représente un détail du procédé de vérification selon la figure 3a, relatif à la gestion d'une absence de cible de branchement,
- la figure 3h représente un détail du procédé de vérification selon la figure 3a, relatif à la gestion de l'effet de l'instruction courante sur la pile des types,
- la figure 3i représente un détail du procédé de vérification selon la figure 3a, relatif à la gestion d'une instruction de lecture d'un registre,
- la figure 3j représente un détail du procédé de vérification selon la figure 3a, relatif à la gestion d'une instruction d'écriture d'un registre,
- la figure 4a représente un organigramme illustratif d'un procédé de transformation d'un code objet d'un fragment de programme en un code objet normalisé pour ce même fragment de programme à instruction de branchement respectivement de cible de branchement à pile vide,
- la figure 4b représente un organigramme illustratif d'un procédé de transformation d'un code objet d'un fragment de programme en un code objet normalisé pour ce même fragment de programme faisant appel à des registres typés, à chaque registre étant attribué un seul type de donnée spécifique,
- la figure 5a représente un détail de mise en oeuvre du procédé de transformation illustré en figure 4a,
- la figure 5b représente un détail de mise en oeuvre du procédé de transformation illustré en figure 4b,
- la figure 6 représente un schéma fonctionnel de l'architecture complète d'un système de développement d'un fragment de programme normalisé, et d'une carte à microprocesseur reprogrammable permettant la mise en oeuvre du protocole de gestion et du procédé de vérification d'un fragment de programme conformément à l'objet de la présente invention.

D'une manière générale, on indique que le protocole de gestion, le procédé de vérification et de transformation d'un fragment de programme téléchargé, objet de la présente invention, ainsi que les systèmes correspondants, sont mis en oeuvre grâce à une architecture logicielle pour le téléchargement et l'exécution sûrs d'appliquettes sur un système informatique embarqué disposant de faibles ressources, tel que notamment les cartes à microprocesseur.

D'une manière générale, on indique que la description ci-après concerne l'application de l'invention dans le contexte des cartes à microprocesseur reprogrammables de type JavaCard, confer documentation disponible électroniquement auprès de la société SUN MICROSYSTEMS INC. rubrique JavaCard Technology précédemment mentionnée dans la description.

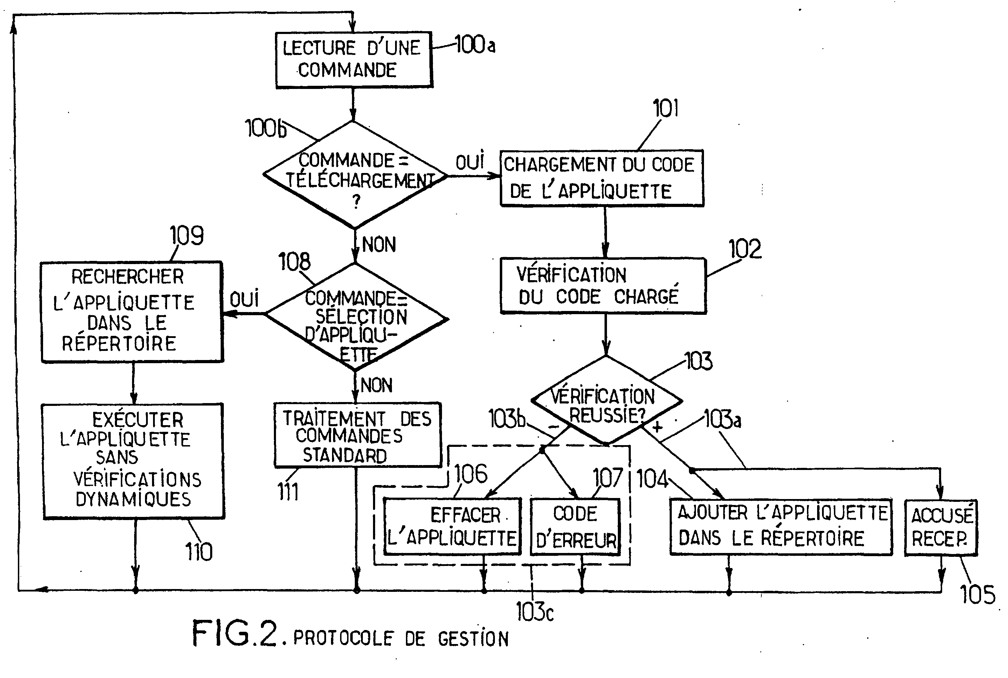

Toutefois, la présente invention est applicable à tout système embarqué reprogrammable par l'intermédiaire d'un téléchargement d'appliquette écrite dans le code d'une machine virtuelle comprenant une pile d'exécution, des registres ou variables locales et dont le modèle d'exécution est fortement typé, chaque instruction du code de l'appliquette ne s'appliquant qu'à des types de données spécifiques. Le protocole de gestion d'un fragment de programme téléchargé sur un système embarqué reprogrammable, objet de la présente invention, sera maintenant décrit de manière plus détaillée en liaison avec la figure 2.

En liaison avec la figure précitée, on indique que le code objet constitutif du fragment de programme ou appliquette est constitué par une suite d'instructions exécutables par le microprocesseur du système embarqué par l'intermédiaire de la machine virtuelle précédemment mentionnée. La machine virtuelle permet d'interpréter le code objet précité. Le système embarqué est interconnecté à un terminal par l'intermédiaire d'une liaison série par exemple.

En référence à la figure 2 précédemment mentionnée, le protocole de gestion objet de la présente invention consiste au moins, au niveau du système embarqué, à détecter en une étape 100a, 100b, une commande de téléchargement de ce fragment de programme. Ainsi, l'étape 100a peut consister en une étape de lecture de la commande précitée et l'étape 100b en une étape de test de la commande lue et de vérification de l'existence d'une commande de téléchargement.

Sur réponse positive à l'étape de détection 100a, 100b précitée d'une commande de téléchargement, le protocole objet de la présente invention consiste ensuite à lire à l'étape 101 le code objet constitutif du fragment de programme considéré et à mémoriser temporairement le code objet précité dans la mémoire du système informatique embarqué. L'opération de mémorisation temporaire précitée peut être exécutée soit dans la mémoire réinscriptible, soit, le cas échéant, dans la mémoire vive du système embarqué, lorsque cette dernière présente une capacité suffisante. L'étape de lecture du code objet et de mémorisation temporaire de ce dernier dans la mémoire réinscriptible est désignée par chargement du code de l'appliquette sur la figure 2.

L'étape précitée est alors suivie d'une étape 102 consistant à soumettre l'ensemble du code objet mémorisé temporairement à un processus de vérification, instruction par instruction, du code objet précité.

Le processus de vérification consiste au moins en une étape d'initialisation de la pile des types et du tableau des types de données représentant l'état de la machine virtuelle au début de l'exécution du code objet mémorisé temporairement, ainsi qu'en une succession d'étapes de vérification instruction par instruction par discrimination de l'existence, pour chaque instruction courante, notée Iᵢ, d'une cible telle qu'une cible d'instruction de branchement notée CIB, une cible d'appel d'un gestionnaire d'exceptions ou une cible d'un appel de sous-routine. Une vérification et une actualisation de l'effet de l'instruction courante Iᵢ sur la pilé des types et sur le tableau des types de registres est effectuée.

Lorsque la vérification est réussie à l'étape 103a, le protocole objet de la présente invention consiste à enregistrer à l'étape 104 le fragment de programme téléchargé dans un répertoire de fragments de programmes disponibles et à envoyer à l'étape 105 au lecteur un accusé de réception positif.

Au contraire, dans le cas d'une vérification non réussie du code objet à l'étape 103b, le protocole objet de l'invention consiste à inhiber, en une étape 103c, toute exécution, sur le système embarqué du fragment de programme enregistré momentanément. L'étape d'inhibition 103c peut être mise en oeuvre de différentes manières. Cette étape peut, à titre d'exemple non limitatif, consister à effacer à l'étape 106 le fragment de programme enregistré momentanément en l'absence d'enregistrement de ce fragment de programme dans le répertoire de fragments de programmes disponibles et, à une étape 107, à adresser au lecteur un code d'erreur. Les étapes 107 et 105 peuvent être réalisées soit séquentiellement après les étapes 106 respectivement 104, soit en opération multitâche avec celles-ci.

En référence à la même figure 2, sur réponse négative à l'étape consistant à détecter une commande de téléchargement à l'étape 100b, le protocole objet de la présente invention consiste à détecter, en une étape 108, une commande de sélection d'un fragment de programme disponible dans un répertoire de fragments de programmes et, sur réponse positive à l'étape 108, la sélection d'un fragment de programme disponible étant détectée, à appeler à l'étape 109 ce fragment de programme disponible sélectionné en vue de son exécution. L'étape 109 est alors suivie d'une étape d'exécution 110 du fragment de programme disponible appelé par l'intermédiaire de la machine virtuelle en l'absence de toute vérification dynamique de types de variables, des droits d'accès aux objets manipulés par le fragment de programme disponible appelé ou du débordement de la pile d'exécution lors de l'exécution de chaque instruction.

Dans le cas où une réponse négative est obtenue à l'étape 108, cette étape consistant à détecter une commande de sélection d'un fragment de programme disponible appelé, le protocole objet de la présente invention consiste à procéder, à une étape 111, au traitement des commandes standard du système embarqué.

En ce qui concerne l'absence de vérification dynamique de type ou de droit d'accès aux objets de type JavaCard par exemple, on indique que cette absence de vérification ne compromet pas la sûreté de la carte car le code de l'appliquette a nécessairement passé avec succès la vérification.

D'une manière plus spécifique, on indique que la vérification de code effectuée, conformément au procédé objet de l'invention, sur la carte à microprocesseur ou sur le système informatique embarqué est plus sélective que la vérification habituelle de codes pour la machine virtuelle Java telle que décrite dans l'ouvrage intitulé "*The Java Virtual Machine Specification*" précédemment mentionné dans la description.

Toutefois, tout code de la machine virtuelle Java correct au sens du vérificateur Java traditionnel peut être transformé en un code équivalent susceptible de passer avec succès la vérification de code effectuée sur la carte à microprocesseur.

Alors qu'il est possible d'envisager l'écriture directe de codes Java satisfaisant aux critères de vérification précédemment mentionnés dans le cadre de la mise en oeuvre du protocole objet de la présente invention, un objet remarquable de celle-ci est également la mise en oeuvre d'un procédé de transformation automatique de tout code Java standard en un code normalisé pour le même fragment de programme satisfaisant nécessairement aux critères de vérification mis en oeuvre précédemment cités. Le procédé de transformation en code normalisé et le système correspondant seront décrits ultérieurement dans la description de manière détaillée.

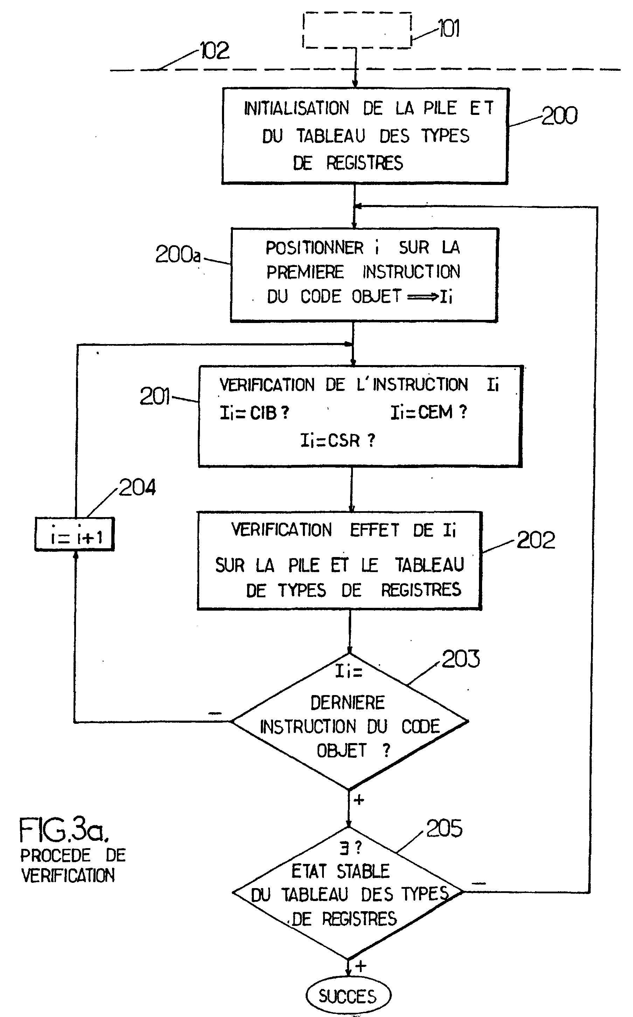

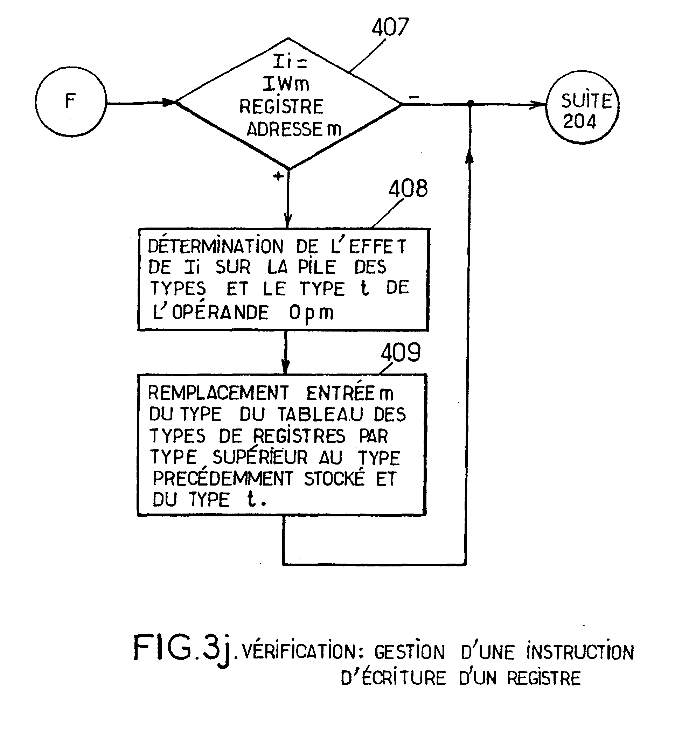

Une description plus détaillée du procédé de vérification d'un fragment de programme, ou appliquette, conforme à l'objet de la présente invention, sera maintenant donnée en liaison avec la figure 3a et les figures suivantes.

D'une manière générale, on indique que le procédé de vérification objet de la présente invention peut être mis en oeuvre soit dans le cadre du protocole de gestion d'un fragment de programme objet de l'invention précédemment décrit en liaison avec la figure 2, soit de manière indépendante, afin d'assurer tout processus de vérification jugé nécessaire.

D'une manière générale, on indique qu'un fragment de programme est constitué par un code objet comportant au moins un sous-programme, plus communément désigné par méthode, et constitué par une suite d'instructions exécutables par le microprocesseur du système embarqué par l'intermédiaire de la machine virtuelle.

Ainsi que représenté sur la figure 3a, le procédé de vérification consiste, pour chaque sous-programme, à effectuer une étape 200 d'initialisation de la pile des types et du tableau des types de registres de la machine virtuelle par des données représentant l'état de cette machine virtuelle au début de l'exécution du code objet, objet de la vérification. Ce code objet peut être mémorisé temporairement ainsi que décrit précédemment en liaison avec la mise en oeuvre du protocole objet de la présente invention.

L'étape 200 précitée est alors suivie d'une étape 200a consistant à positionner la lecture de l'instruction courante Iᵢ, index i, sur la première instruction du code objet. L'étape 200a est suivie d'une étape 201 consistant à effectuer une vérification du code objet précité instruction par instruction, par discrimination pour chaque instruction courante notée Iᵢ de l'existence d'une cible d'instruction de branchement CIB, d'une cible d'un appel de gestionnaire d'exceptions, noté CEM, ou d'une cible d'un appel de sous-routine CSR.

L'étape de vérification 201 est suivie d'une étape de vérification 202 et d'actualisation de l'effet de l'instruction courante Iᵢ sur les types de données de la pile des types et du tableau des types de registres en fonction de l'existence, pour l'instruction courante visée par une autre instruction, d'une cible d'instruction de branchement CIB, d'une cible d'un appel de sous-routine CSR ou d'une cible d'un appel de gestionnaire d'exceptions CEM.

L'étape 202 pour l'instruction courante Iᵢ est suivie d'une étape de test 203 d'atteinte de la dernière instruction, test noté
Iᵢ = dernière instruction du code objet ?
Sur réponse négative au test 203, le processus passe à l'instruction suivante 204, noté i = i+1, et au retour à l'étape 201.

On indique que la vérification précitée, à l'étape 202, est réussie lorsque le tableau des types de registres n'est pas modifié au cours d'une vérification de toutes les instructions Iᵢ constitutives du code objet. Dans ce but, un test 205 d'existence d'un état stable du tableau des types de registres et prévu. Ce test est noté :
3? Etat stable du tableau des types de registres.
Sur réponse positive au test 205, la vérification a réussi.

Dans le cas où au contraire aucune absence de modification est constatée, le processus de vérification est réitéré et relancé par retour à l'étape 200a. On démontre que la fin du processus est garantie après au plus NrxH itérations, où Nr désigne le nombre de registres utilisés et H une constante dépendant de la relation de sous-typage.

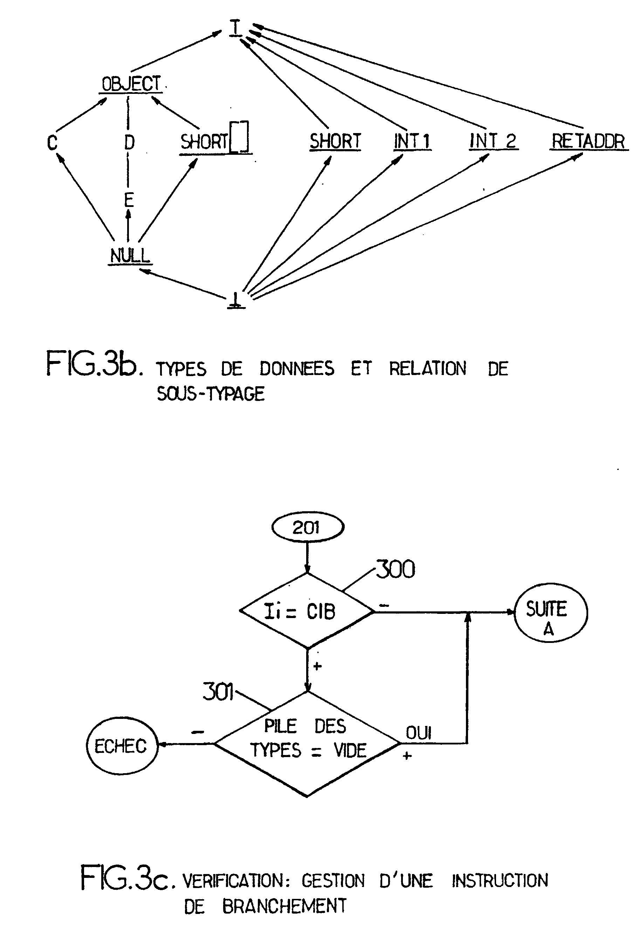

Différentes indications relatives aux types de variables manipulées au cours du processus de vérification décrit précédemment en liaison avec la figure 3a seront maintenant données en liaison avec la figure 3b.

Les types de variables précités comportent au moins des identificateurs de classes correspondant aux classes d'objets définis dans le fragment de programme soumis à la vérification, des types de variables numériques comportant au moins un type short, entier codé sur p bits, p pouvant prendre la valeur p = 16, et un type d'adresse de retour d'une instruction de saut JSR, ce type d'adresse étant noté retaddr, un type null relatif à des références d'objets nuls, un type object relatif aux objets proprement dits, un type spécifique ⊥ représentant l'intersection de tous les types et correspondant à la valeur zéro nul, un autre type spécifique T représentant l'union de tous les types et correspondant à tout type de valeurs.

En référence à la figure 3b, on indique que l'ensemble des types de variables précités vérifient une relation de sous-typage :
object ∈ T ;
short,retaddr ∈ T ;
⊥ ∈ null,short,retaddr

Un exemple plus spécifique d'un processus de vérification tel qu'illustré en figure 3a sera maintenant donné en liaison avec un premier exemple de structure de données illustré au tableau T1 joint en annexe.

L'exemple précité concerne une appliquette écrite en code Java.

Le processus de vérification accède au code du sous-programme constitutif de l'appliquette soumis à vérification par l'intermédiaire d'un pointeur sur l'instruction Iᵢ en cours de vérification.

Le processus de vérification enregistre la taille et le type de la pile d'exécution au niveau de l'instruction courante Iᵢ correspondant à saload sur l'exemple du tableau T1 précité.

Le processus de vérification enregistre alors la taille et le type de la pile d'exécution au niveau de l'instruction courante dans la pile des types par l'intermédiaire de son pointeur de pile des types.

Ainsi que mentionné précédemment dans la description, cette pile de types reflète l'état de la pile d'exécution de la machine virtuelle au niveau de l'instruction courante Iᵢ. Dans l'exemple représenté au tableau T1, lors de l'exécution future de l'instruction Iᵢ, la pile contiendra trois entrées : une référence vers un objet de la classe C, une référence vers un tableau d'entiers codés sur p = 16 bits, le type short[], et un entier de p = 16 bits de type short. Ceci est également représenté dans la pile des types qui contient également trois entrées : C, le type des objets de la classe C, short[], le type des tableaux d'entiers p = 16 bits et short, le type des entiers p = 16 bits.

Une autre structure de données remarquable est constituée par un tableau de types de registres, ce tableau reflétant l'état des registres, c'est-à-dire des registres mémorisant les variables locales, de la machine virtuelle.

En continuant l'exemple indiqué au tableau T1, on indique que l'entrée 0 du tableau de types de registres contient le type C, c'est-à-dire que lors de l'exécution future de l'instruction courante Iᵢ = saload, le registre 0 est assuré de contenir une référence vers un objet de la classe C.

Les différents types manipulés au cours de la vérification et stockés dans le tableau de types de registres et dans la pile de types sont représentés en figure 3b. Ces types comprennent :
- des identificateurs de classe CB correspondant aux classes d'objets spécifiques définis dans l'appliquette ;
- des types de base, tels que short entier codé sur p = 16 bits, int1 et int2, p bits les plus et les moins significatifs respectivement d'entiers codés sur 2p bits par exemple, ou retaddr adresse de retour d'une instruction, ainsi que mentionné précédemment ;
- le type null représentant les références d'objets nuls.

En ce qui concerne la relation de sous-typage, on indique qu'un type T1 est sous-type d'un type T2 si toute valeur valide du type T1 est également une valeur valide du type T2. Le sous-typage entre identificateur de classes reflète la hiérarchie d'héritage entre classes de l'appliquette. Sur les autres types, le sous-typage est défini par le treillis représenté en figure 3b, ⊥ étant sous-type de tous les types et tous les types étant sous-types de T.

Le déroulement du processus de vérification d'un sous-programme constitutif d'une appliquette est le suivant, en référence au tableau T1 précédemment mentionné.

Le processus de vérification s'effectue indépendamment sur chaque sous-programme de l'appliquette. Pour chaque sous-programme, le processus effectue une ou plusieurs passes de vérification sur les instructions du sous-programme considéré. Le pseudo-code du processus de vérification est donné au tableau T2 joint en annexe.

Le processus de vérification d'un sous-programme débute par l'initialisation de la pile des types et du tableau des types de registres représentés au tableau T1, cette initialisation reflétant l'état de la machine virtuelle au début de l'exécution du sous-programme examiné.

La pile des types est initialement vide, le pointeur de pile est égal à zéro, et les types de registres sont initialisés avec les types des paramètres du sous-programme illustrant le fait que la machine virtuelle passe les paramètres de ce sous-programme dans ces registres. Les types de registres alloués par le sous-programme sont initialisés aux types de données *⊥* illustrant le fait que la machine virtuelle initialise ces registres à zéro au début de l'exécution du sous-programme.

Ensuite, une ou plusieurs passes de vérification sur les instructions et sur chaque instruction courante Iᵢ du sous-programme sont effectuées.

A la fin de la passe de vérification mise en oeuvre ou d'une succession de passes par exemple, le processus de vérification détermine si les types de registres contenus dans le tableau des types de registres représentés au tableau T1 de l'annexe ont changé pendant la passe de vérification. En l'absence de changement, la vérification est terminée et un code de succès est renvoyé au programme principal, lequel permet d'envoyer l'accusé de réception positif à l'étape 105 du protocole de gestion représenté en figure 2.

En présence d'une modification du -tableau des types de registres précité, le processus de vérification réitère la passe de vérification jusqu'à ce que les types de registres contenus dans le tableau des types de registres soit stable.

Le déroulement proprement dit d'une passe de vérification effectuée une ou plusieurs fois jusqu'à la stabilité du tableau des types de registres sera maintenant décrit en liaison avec les figures 3c à 3j.

Pour chaque instruction courante Iᵢ, les vérifications suivantes sont effectuées :

En liaison avec la figure 3a à l'étape 201, le processus de vérification détermine si l'instruction courante Iᵢ est la cible d'une instruction de branchement, d'appel de sous-routine ou d'un gestionnaire d'exception, ainsi que mentionné précédemment. Cette vérification s'effectue par examen des instructions de branchement contenues dans le code du sous-programme et des gestionnaires d'exceptions associés à ce sous-programme.

En référence à la figure 3c ouverte par l'étape 201, lorsque l'instruction courante Iᵢ est la cible d'une instruction de branchement, cette condition étant réalisée par un test 300 désigné par Iᵢ=CIB, ce branchement étant inconditionnel ou conditionnel, le processus de vérification s'assure que la pile des types est vide à ce point du sous-programme par un test 301. Sur réponse positive au test 301, le processus de vérification est poursuivi par une étape suite de contexte noté suite A. Sur réponse négative au test 301, la pile des types n'étant pas vide, la vérification échoue et l'appliquette est rejetée. Cet échec est représentée par l'étape Echec.

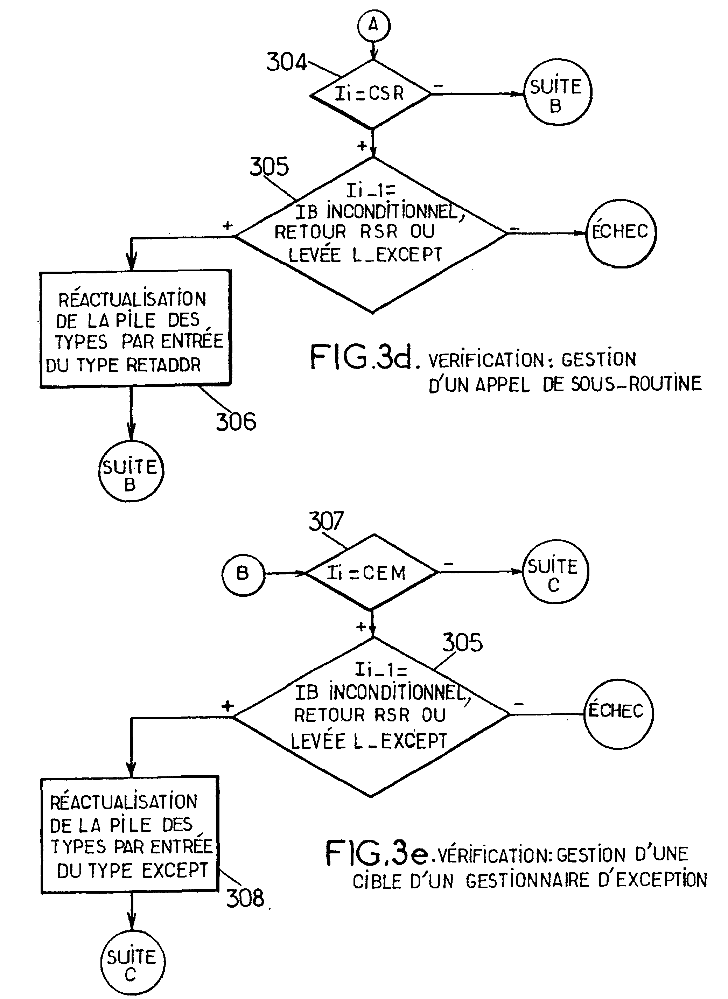

En référence à la figure 3d ouverte par l'étape suite A, lorsque l'instruction courante Iᵢ est la cible d'un appel de sous-routine, cette condition étant réalisée par un test 304 Iᵢ=CSR, le processus de vérification vérifie en un test 305 que l'instruction précédente Iᵢ₋₁ ne continue pas en séquence. Cette vérification est réalisée par une étape de test 305 lorsque l'instruction précédente constitue un branchement inconditionnel, un retour de sous-routine ou une levée d'exception. Le test à l'étape 305 est noté ainsi :
Iᵢ₋₁ = IB_{inconditionnel}, retour RSR ou levée L-EXCEPT.

Sur réponse négative au test 305, le processus de vérification échoue en une étape Echec. Au contraire, sur réponse positive au test 305, le processus de vérification réinitialise la pile des types de façon que celle-ci contienne exactement une entrée de type retaddr, adresse de retour de la sous-routine précitée. Si l'instruction courante Iᵢ à l'étape 304 n'est pas la cible d'un appel de sous-routine, le processus de vérification est poursuivi dans le contexte à l'étape suite B.

En référence à la figure 3e, lorsque l'instruction courante Iᵢ est la cible d'un gestionnaire d'exceptions, cette condition étant réalisée par un test 307 noté Iᵢ = CEM, CEM désignant la cible d'un gestionnaire d'exceptions, cette condition est réalisée par l'intermédiaire d'un test 307, noté :
Iᵢ=CEM.
Le processus, sur réponse positive au test 307 vérifie que l'instruction précédente constitue un branchement inconditionnel, un retour de sous-routine ou une levée d'exeptions par l'intermédiaire d'un test 305 noté :
Iᵢ₋₁=IB_{inconditionnel}, retour RSR ou levée L-EXCEPT.

Sur réponse positive au test 305, le processus de vérification procède à une réactualisation de la pile des types, à une étape 308, par une entrée de types des exceptions, notée type EXCEPT, l'étape 308 étant suivie d'une étape de suite de contexte, suite C. Sur réponse négative au test 305, le processus de vérification échoue par l'étape notée Echec. Le fragment de programme est alors rejeté.

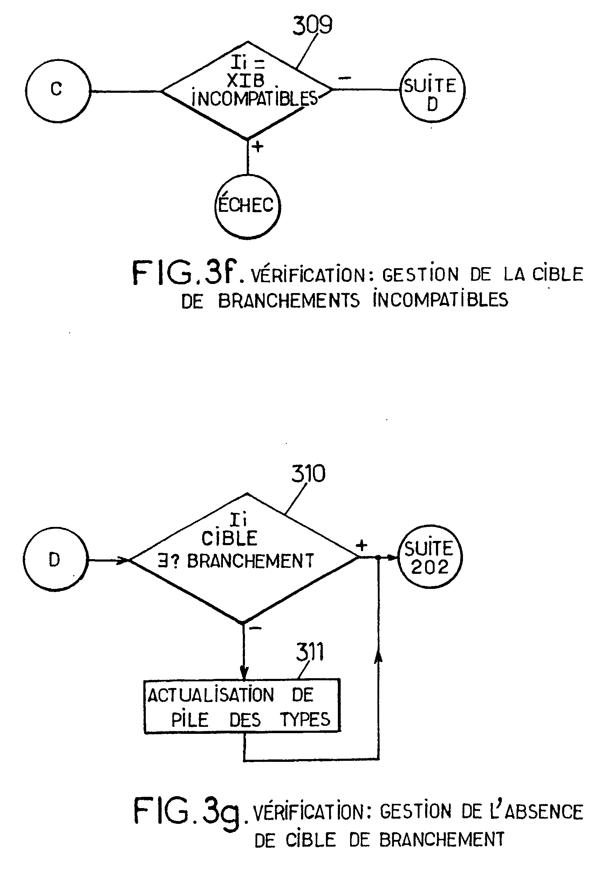

En référence à la figure 3f, lorsque l'instruction courante Iᵢ est la cible d'une pluralité de branchements incompatibles, cette condition est réalisée par un test 309, lequel est noté :
Iᵢ=XIB incompatibles
les branchements incompatibles étant par exemple un branchement inconditionnel et un appel de sous-routine ou encore deux gestionnaires d'exceptions différents. Sur réponse positive au test 309, les branchements étant incompatibles, le processus de vérification échoue par une étape notée Echec et le fragment de programme est rejeté. Sur réponse négative au test 309, le processus de vérification est poursuivi par une étape notée suite D. Le test 309 est ouvert par l'étape suite C précédemment mentionnée dans la description.

En référence à la figure 3g, lorsque l'instruction courante Iᵢ n'est la cible d'aucun branchement, cette condition étant réalisée par un test 310 ouvert par la suite D précédemment mentionnée, ce test étant noté
Iᵢ ∃? cibles de branchement,
∃ désignant le symbole d'existence,
le processus de vérification continue sur réponse négative au test 310 par passage à une actualisation de la pile des types à une étape 311, l'étape 311 et la réponse positive au test 310 étant suivies d'une étape de suite de contexte à l'étape 202, décrite précédemment dans la description en liaison avec la figure 3a.

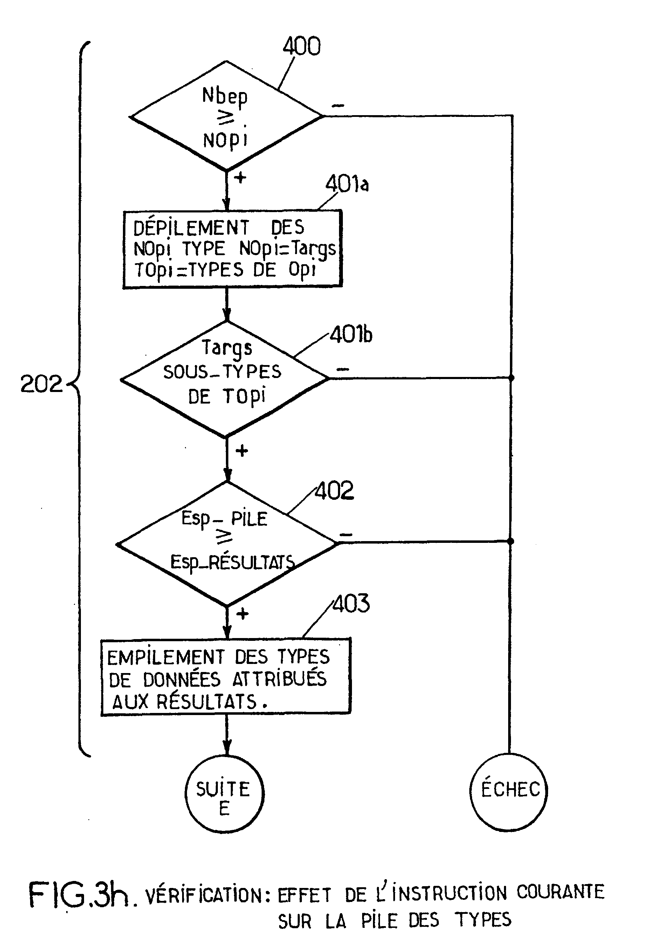

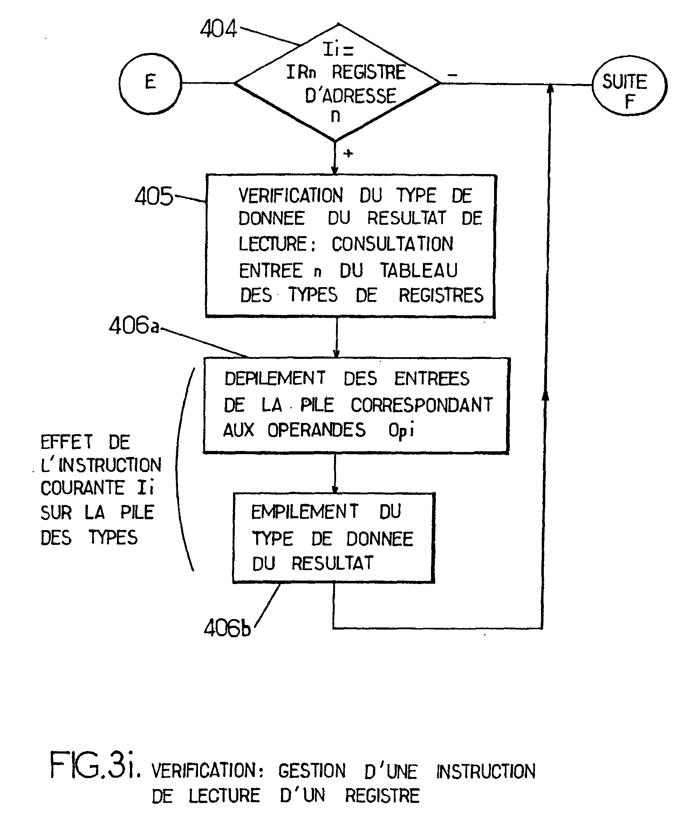

Une description plus détaillée de l'étape de vérification de l'effet de l'instruction courante sur la pile des types à l'étape 202 précédemment citée sera maintenant donnée en liaison avec la figure 3h.

Selon la figure précitée, cette étape peut comporter au moins une étape 400 de vérification que la pile d'exécution des types contient au moins autant d'entrées que l'instruction courante comporte d'opérandes. Cette étape de test 400 est notée :
Nbep ≥ NOpi
où Nbep désigne le nombre d'entrées de la pile des types et NOpi désigne le nombre d'opérandes contenus dans l'instruction courante.
Sur réponse positive au test 400, ce test est suivi d'une étape 401a de dépilement de la pile des types et de vérification 401b que les types des entrées au sommet de la pile sont sous-types des types des opérandes de l'instruction courante précitée. A l'étape de test 401a, les types des opérandes de l'instruction i sont notés TOpi et les types des entrées au sommet de la pile sont notés Targs.

A l'étape 401b, la vérification correspond à une vérification de la relation de sous-typage Targs sous-type de TOpi.

Sur réponse négative au test 400 et au test 401b, le processus de vérification échoue, ce qui est illustré par l'accès à l'étape Echec. Au contraire sur réponse positive au test 401b, le processus de vérification est poursuivi et consiste à effectuer :
- Une étape de vérification de l'existence d'un espace mémoire suffisant sur la pile des types, pour procéder à l'empilement des résultats de l'instruction courante. Cette étape de vérification est réalisée par un test 402 noté :
   Esp-pile ≥ Esp-résultats
où chaque membre de l'inégalité désigne l'espace mémoire correspondant.
Sur réponse négative au test 402, le processus . de vérification échoue, ce qui est illustré par l'étape Echec. Au contraire, sur réponse positive au test 402, le processus de vérification procède alors à l'empilement des types de données attribuées aux résultats en une étape 403, l'empilement étant effectué sur la pile des types de données attribuée à ces résultats.

A titre d'exemple non limitatif, on indique que pour la mise en oeuvre de la figure 3h de vérification de l'effet de l'instruction courante sur la pile des types, pour une instruction courante constituée par une instruction Java saload correspondant à la lecture d'un élément entier codé sur p = 16 bits dans un tableau d'entiers, ce tableau d'entiers étant défini par le tableau d'entiers et un indice entier dans ce tableau, et le résultat par l'entier lu à cet indice dans ce tableau, le processus de vérification s'assure que la pile des types contient au moins deux éléments, que les deux éléments au sommet de la pile des types sont sous-types de short[] respectivement short, procède au processus de dépilement et ensuite au processus d'empilement du type de données short comme type du résultat.

En outre, en référence à la figure 3i, pour la mise en oeuvre de l'étape de vérification de l'effet de l'instruction courante sur la pile des types, lorsque l'instruction courante Iᵢ est une instruction de lecture, notée IR, d'un registre d'adresse n, cette condition étant réalisée par un test 404 noté Iᵢ=IRₙ, sur réponse positive au test 404 précité, le processus de vérification consiste à vérifier le type de données du résultat de cette lecture, en une étape 405, par consultation de l'entrée n du tableau des types de registres, puis à déterminer l'effet de l'instruction courante Iᵢ sur la pile des types par une opération 406a de dépilement des entrées de la pile correspondant aux opérandes de cette instruction courante et par empilement 406b du type de données de ce résultat. Les opérandes de l'instruction Iᵢ sont notés OPᵢ. Les étapes 406a et 406b sont suivies d'un retour à la suite de contexte suite F. Sur réponse négative au test 404, le processus de vérification est poursuivi par la suite de contexte suite F.

En référence à la figure 3j, lorsque l'instruction courante Iᵢ est une instruction d'écriture, notée IW, d'un registre d'adresse n, cette condition étant réalisée par un test noté Iᵢ=IWₘ, le processus de vérification consiste, sur réponse positive au test 407, à déterminer en une étape 408 l'effet de l'instruction courante sur la pile des types et le type t de l'opérande écrit dans le registre d'adresse n, puis, en une étape 409, à remplacer l'entrée du type du tableau des types de registres à l'adresse n par le type immédiatement supérieur au type précédemment stocké et au type t de l'opérande écrit dans le registre d'adresse n. L'étape 409 est suivie d'un retour à la suite de contexte suite 204. Sur réponse négative au test 407, le processus de vérification est poursuivi par une suite de contexte suite 204.

A titre d'exemple, lorsque l'instruction courante Iᵢ correspond à l'écriture d'une valeur de type D dans un registre d'adresse 1 et que le type du registre 1 avant vérification de l'instruction était C, le type du registre 1 est remplacé par le type object qui est le type supérieur le plus petit de C et D dans le treillis des types représenté en figure 3b.

De même, à titre d'exemple, lorsque l'instruction courante Iᵢ est une lecture d'une instruction aload-0 consistant à empiler le contenu du registre 0 et que l'entrée 0 du tableau des types de registres est C, le vérificateur empile C sur la pile des types.

Un exemple de vérification d'un sous-programme écrit en environnement Java sera maintenant donné en liaison avec les tableaux T3 et T4 introduits en annexe.

Le tableau T3 représente un code JavaCard spécifique correspondant au sous-programme Java inclus dans ce tableau.

Le tableau T4 illustre le contenu du tableau des types de registres et de la pile des types avant la vérification de chaque instruction. Les contraintes de types sur les opérandes des diverses instructions sont toutes respectées. La pile est vide aussi bien après l'instruction de branchement 5 - à l'instruction 9 symbolisée par la flèche, qu'avant la cible de branchement 9 précitée. Le type du registre 1 qui était initialement ⊥ devient null, la borne supérieure de null et de ⊥, lorsque l'instruction 1 de stockage d'une valeur de type null dans le registre 1 est examinée, puis devient de type short[], la borne supérieure du type short[] et du type null, lorsque l'instruction 8, stockage d'une valeur de type short[] dans le registre 1 est traitée. Le type du registre 1 ayant changé pendant la première passe de vérification, une seconde passe est effectuée en repartant des types de registres obtenus à la fin de la première. Cette seconde passe de vérification réussit tout comme la première et ne modifie pas les types des registres. Le processus de vérification se termine donc avec succès.

Différents exemples de cas d'échec du processus de vérification sur quatre exemples de code incorrect seront maintenant donnés en liaison avec le tableau T5 introduit en annexe :
- Au point a) du tableau T5, le code donné en exemple a pour objet de tenter de fabriquer une référence d'objet invalide en utilisant un processus arithmétique sur des pointeurs. Il est rejeté par la vérification des types des arguments de l'instruction 2 sadd, laquelle exige que ces deux arguments soient de type short.
- Aux points b) et c) du tableau T5, le code a pour objet de réaliser deux tentatives de convertir un entier quelconque en une référence d'objet. Au point b), le registre 0 est utilisé à la fois avec le type short, instruction 0, et avec le type null, instruction 5. En conséquence, le processus de vérification attribue le type T au registre 0 et détecte une erreur de type lorsque le registre 0 est renvoyé comme résultat de type object à l'instruction 7.
- Au point c) du tableau T5, un ensemble de branchements du type "if...then...else..." est utilisé pour laisser au sommet de la pile un résultat qui est constitué soit par un entier soit par une référence d'objet. Le processus de vérification rejette ce code car il détecte que la pile n'est pas vide au niveau du branchement de l'instruction 5 vers l'instruction 9 symbolisée par la flèche.
- Enfin, au point d) du tableau T5, le code contient une boucle qui, à chaque itération, a pour effet d'empiler un entier de plus au sommet de la pile et de provoquer donc un débordement de la pile après un certain nombre d'itérations. Le processus de vérification rejette ce code en constatant que la pile n'est pas vide au niveau du branchement arrière de l'instruction 8 vers l'instruction 0, symbolisé par la flèche de retour, la pile n'étant pas vide à un point de branchement.

Les différents exemples donnés précédemment en liaison avec les tableaux T3, T4 et T5 montrent que le processus de vérification, objet de la présente invention, est particulièrement efficace et qu'il s'applique à des appliquettes et en particulier aux sous-programmes de ces dernières, pour lesquelles les conditions de type de pile respectivement de caractère vide de la pile des types antérieurement et aux instructions de branchement ou de cibles de branchement sont satisfaites.

Bien entendu, un tel processus de vérification implique l'écriture de codes objet satisfaisant à ces critères, ces codes objet pouvant correspondre au sous-programme introduit au tableau T3 précédemment mentionné.

Toutefois, et afin d'assurer la vérification d'appliquettes et de sous-programmes d'appliquettes existantes qui ne satisfont pas nécessairement aux critères de vérification du procédé objet de la présente invention, en particulier pour ce qui concerne les appliquettes et les sous-programmes écrits en environnement Java, la présente invention a pour objet d'établir des procédés de transformation de ces appliquettes ou sous-programmes en appliquettes ou fragments de programme normalisés permettant de subir avec succès les tests de vérification du procédé de vérification objet de la présente invention et du protocole de gestion mettant en oeuvre un tel procédé.

Dans ce but, l'invention a donc pour objet la mise en oeuvre d'un procédé et d'un programme de transformation d'un code objet classique constituant une appliquette, ce procédé et ce programme de transformation pouvant être mis en oeuvre hors d'un système embarqué ou d'une carte à microprocesseur lors de la création de l'appliquette considérée.

Le procédé de transformation de code en code normalisé objet de la présente invention, sera maintenant décrit dans le cadre de l'environnement Java à titre d'exemple purement illustratif.

Les codes JVM produits par les compilateurs Java existants satisfont à différents critères, lesquels sont énoncés ci-après :
- C1 :: les arguments de chaque instruction appartiennent bien aux types attendus par cette instruction ;
- C2 :: la pile ne déborde pas ;
- C'3 :: pour chaque instruction de branchement, le type de la pile au niveau de ce branchement est le même qu'au niveau des cibles possibles pour ce branchement ;
- C'4 :: une valeur de type t écrite dans un registre en un point du code et relue depuis ce même registre en un autre point du code est toujours relue avec le même type t ;

La mise en oeuvre du procédé de vérification objet de la présente invention, implique que les critères C'3 et C'4 vérifiés par le code objet soumis à vérification soient remplacés par les critères C3 et C4 ci-après :
- C3 :: la pile est vide à chaque instruction de branchement et à chaque cible de branchement ;
- C4 :: un même registre est utilisé avec un seul et même type dans tout le code d'un sous-programme.

En référence aux critères précités, on indique que les compilateurs Java garantissent seulement les critères plus faibles C'3 et C'4, le processus de vérification objet de la présente invention et le protocole de gestion correspondant garantissent en fait des critères C3 et C4 plus contraignants permettant d'assurer la sécurité d'exécution et de gestion des appliquettes.

La notion de normalisation recouvrant la transformation des codes en codes normalisés peut présenter différents aspects, dans la mesure où le remplacement des critères C'3 et C'4 par les critères C3 et C4, conformément au processus de vérification objet de la présente invention, peut être réalisé de manière indépendante pour assurer que la pile est vide à chaque instruction de branchement et à chaque cible de branchement, respectivement que les registres ouverts par l'appliquette sont typés, à chaque registre ouvert correspondant un seul type de donnée attribué pour l'exécution de l'appliquette considérée, ou, au contraire, de manière conjointe, afin de satisfaire à l'ensemble du processus de vérification objet de la présente invention.

Le procédé de transformation d'un code objet en code objet normalisé selon l'invention sera en conséquence décrit selon deux modes de mise en oeuvre distincts, un premier mode de mise en oeuvre correspondant à la transformation d'un code objet satisfaisant aux critères C1, C2, C'3, C'4 en un code objet normalisé satisfaisant aux critères C1, C2, C3, C'4 correspondant à un code normalisé à instruction de branchement ou cible de branchement vide, puis, selon un deuxième mode de réalisation, dans lequel le code objet classique satisfaisant aux mêmes critères de départ, est transformé en un code objet normalisé satisfaisant aux critères C1, C2, C'3, C4 par exemple correspondant à un code normalisé faisant appel à des registres typés.

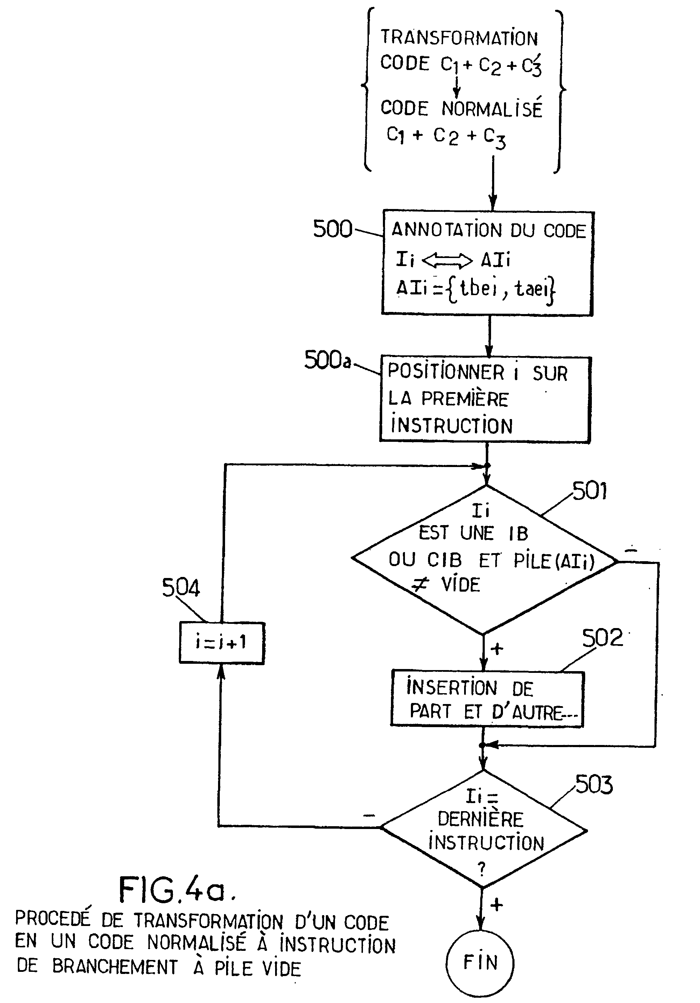

Le premier mode de réalisation du procédé de transformation de code, objet de la présente invention, sera maintenant décrit en liaison avec la figure 4a. Dans le mode de réalisation illustré en figure 4a, le code classique de départ est réputé satisfaire aux critères C1+C2+C'3 et le code normalisé obtenu du fait de la transformation est réputé satisfaire aux critères C1+C2+C3.

Selon la figure précitée, le procédé de transformation consiste, pour chaque instruction courante Iᵢ du code ou du sous-programme, à annoter chaque instruction, en une étape 500, par le type de données de la pile avant et après l'exécution de cette instruction. Les données d'annotation sont notées AIᵢ et sont associées par la relation Iᵢ↔AIᵢ en instruction courante considérée. Les données d'annotation sont calculées au moyen d'une analyse du flot des données relatif à cette instruction. Les types de données avant et après exécution de l'instruction sont notés tbeᵢ et taeᵢ respectivement. Le calcul des données d'annotation par analyse du flot des données est un calcul classique connu de l'homme du métier et, à ce titre, ne sera pas décrit en détail.

L'opération réalisée à l'étape 500 est illustrée au tableau T6 introduit en annexe dans lequel, pour une appliquette ou sous-programme d'appliquette comportant 12 instructions, les données d'annotation AIᵢ constituées par les types des registres et les types de la pile sont introduites.

L'étape 500 précitée est alors suivie d'une étape 500a consistant à positionner l'index i sur la première instruction Iᵢ=I₁. L'étape 500a est suivie d'une étape 501 consistant à détecter, au sein des instructions et de chaque instruction courante Iᵢ, l'existence de branchements notés IB ou de cibles de branchement CIB pour lesquels la pile d'exécution n'est pas vide. Cette détection 501 est réalisée par un test conduit à partir des données d'annotation AIᵢ du type des variables de pile alloué à chaque instruction courante, le test étant noté pour l'instruction courante :
Iᵢ est une IB ou CIB et pile(AI)≠ vide.

Sur réponse positive au test 501, c'est-à-dire en présence d'une détection d'une pile d'exécution non vide, le test précité est suivi d'une étape consistant à insérer des instructions de transfert des variables de pile de part et d'autre de ces branchements IB ou de ces cibles de branchement CIB, afin de vider le contenu de la pile d'exécution dans des registres temporaires avant ce branchement et de rétablir la pile d'exécution à partir des registres temporaires après ce branchement. L'étape d'insertion est notée 502 sur la figure 4a. Elle est suivie d'une étape de test 503 d'atteinte de la dernière instruction noté
Iᵢ=demière instruction?
Sur réponse négative au test 503, une incrémentation 504 i=i+1 est effectuée pour passage à l'instruction suivante et retour à l'étape 501. Sur réponse positive au test 503, une étape de Fin est lancée. Sur réponse négative au test 501,le procédé de transformation est poursuivi par un branchement vers l'étape 503 en l'absence d'insertion d'instruction de transfert. La mise en oeuvre du procédé de transformation d'un code classique en un code normalisé à instruction de branchement à pile vide tel que représenté en figure 4a, permet d'obtenir un code objet normalisé pour le même fragment de programme de départ dans lequel la pile des variables de pile est vide à chaque instruction de branchement et à chaque instruction de cible de branchement, en l'absence de modification de l'exécution du fragment de programme. Dans le cas d'un environnement Java, les instructions de transfert de données entre pile et registre sont les instructions load et store de la machine virtuelle Java.

En reprenant l'exemple introduit au tableau T6, le procédé de transformation détecte une cible de branchement où la pile n'est pas vide au niveau de l'instruction 9. Il est donc procédé à l'insertion d'une instruction istore 1 avant l'instruction de branchement 5 qui mène à l'instruction 9 précitée afin de sauvegarder le contenu de la pile dans le registre 1 et d'assurer que la pile est vide lors du branchement. Symétriquement, l'insertion d'une instruction iload 1 est effectuée préalablement à la cible d'instruction 9 pour rétablir le contenu de la pile identiquement à ce qu'il était avant le branchement. Finalement, une instruction istore 1 est insérée après l'instruction 8 pour garantir l'équilibre de la pile sur les deux chemins qui mènent à l'instruction 9. Le résultat de la transformation ainsi opérée en un code normalisé est représenté au tableau T7.

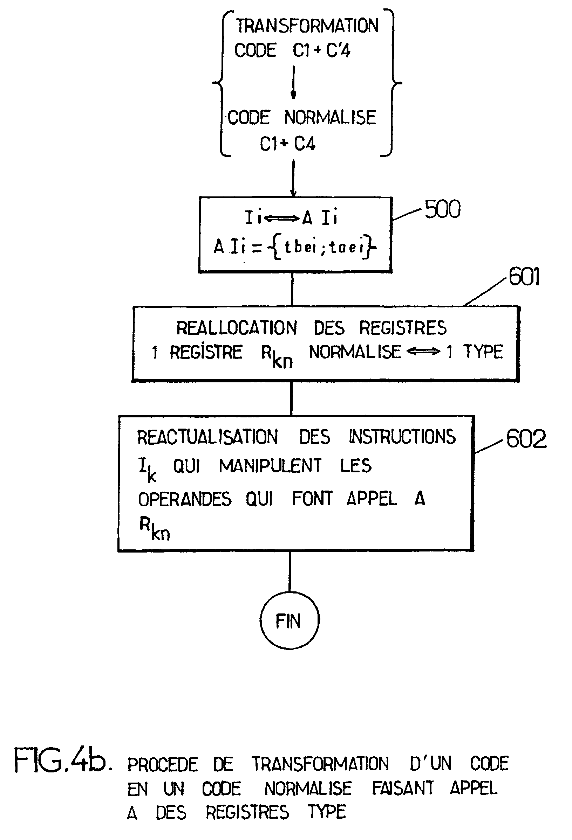

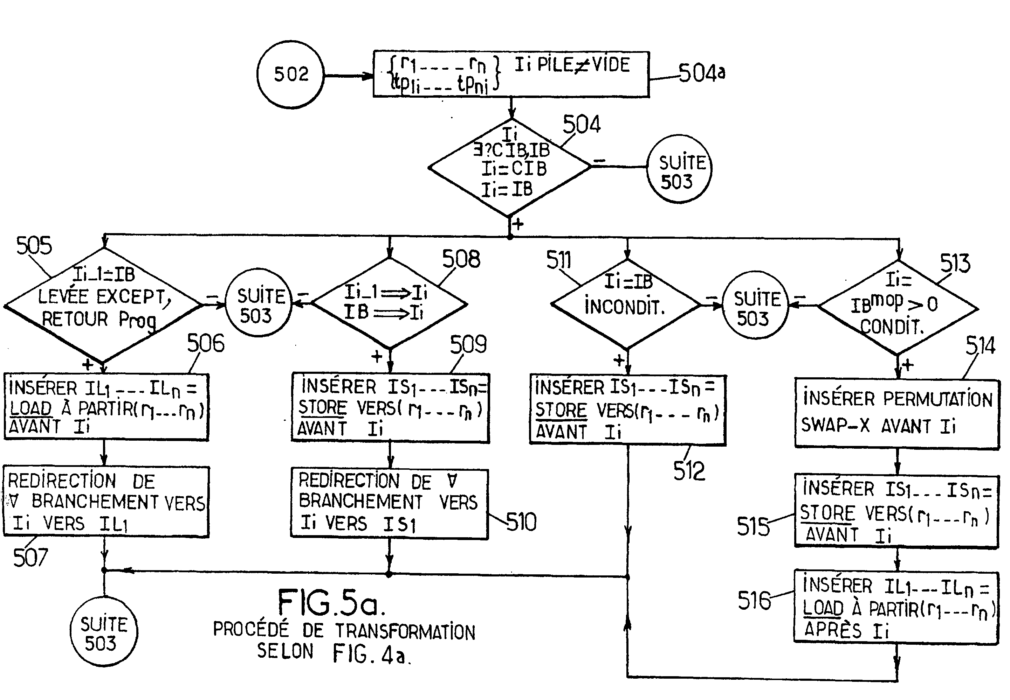

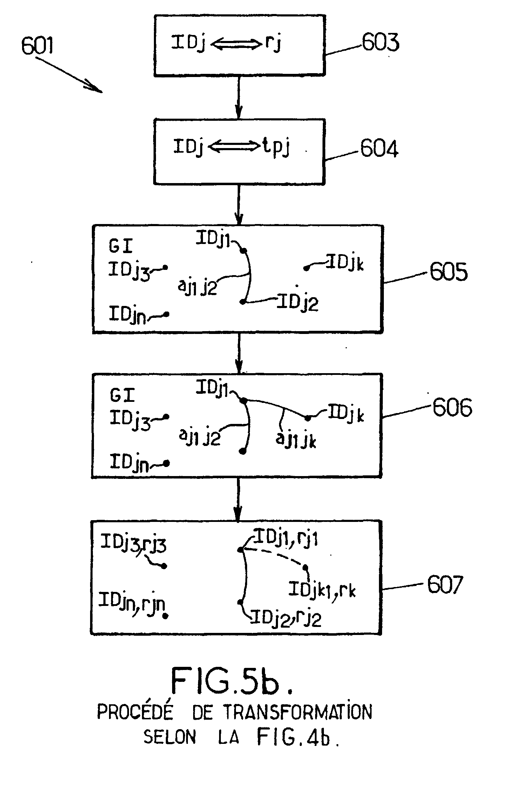

Le deuxième mode de réalisation du procédé de transformation objet de la présente invention sera maintenant décrit en liaison avec la figure 4b dans le cas où le code objet classique de départ satisfait aux critères C1+C'4 et le code objet normalisé satisfait aux critères C1+C4.

En référence à la figure 4b précitée, on indique que le procédé, dans ce mode de réalisation, consiste à annoter, selon une étape 500 sensiblement identique à celle représentée en figure 4a, chaque instruction courante Iᵢ par le type de données des registres avant et après l'exécution de cette instruction. De la même manière, les données d'annotations AIᵢ sont calculées au moyen d'une analyse du flot des données relatif à cette instruction.

L'étape d'annotation 500 est alors suivie d'une étape consistant à effectuer une réallocation des registres, étape notée 601, par détection des registres d'origine employés avec des types différents, division de ces registres d'origine en registres normalisés distincts, un registre normalisé étant alloué à chaque type de données utilisé. L'étape 601 est suivie d'une étape 602 de réactualisation des instructions qui manipulent les opérandes qui font appel aux registres . normalisés précités. L'étape 602 est suivie d'une étape de suite de contexte 302.

En référence à l'exemple donné au tableau T6, on indique que le procédé de transformation détecte que le registre de rang 0, noté r0, est utilisé avec les deux types object, instructions 0 et 1, et int, instruction 9 et suivantes. Il est alors procédé à une division du registre d'origine r0 en deux registres, le registre 0 pour l'utilisation des types object et le registre 1 pour les utilisations de type int. Les références au registre 0 de type int sont alors réécrites en les transformant en des références au registre 1, le code normalisé obtenu étant introduit au tableau T8 joint en annexe.

On note de manière non limitative que dans l'exemple introduit en liaison avec le tableau T8 précité, le nouveau registre 1 est utilisé à la fois pour la normalisation de la pile et pour la création de registres typés par division du registre 0 en deux registres.

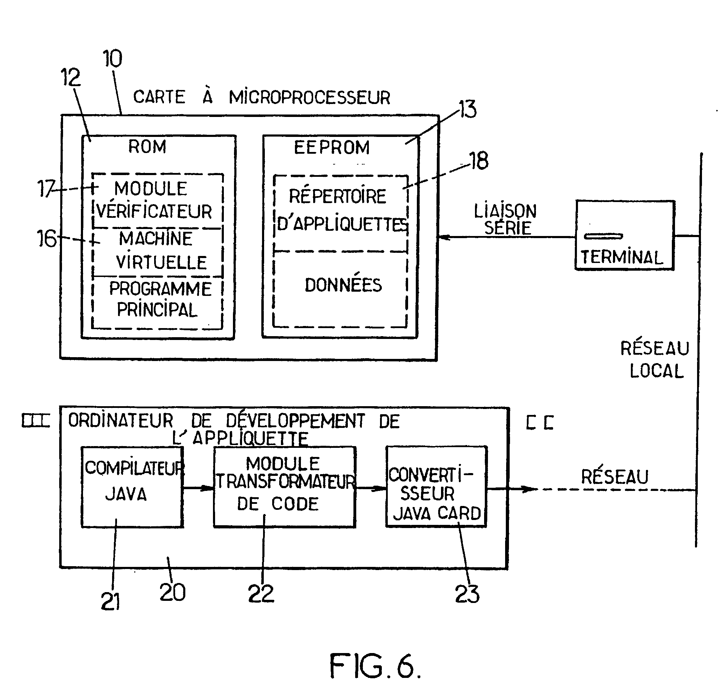

Le procédé de transformation d'un code classique en un code normalisé à instruction de branchement à pile vide tel que décrit en figure 4a sera maintenant décrit de manière plus détaillée dans un mode de réalisation préférentiel non limitatif, en relation avec la figure 5a.

Ce mode de réalisation concerne l'étape 501 consistant à détecter au sein des instructions et de chaque instruction courante Iᵢ l'existence de branchement IB respectivement de cible de branchement CIB pour laquelle la pile n'est pas vide.

Suite à la détermination des instructions cible où la pile n'est pas vide, cette condition étant notée à l'étape 504a, Iᵢ pile≠vide, le processus de transformation consiste à associer, à l'étape 504a précitée, à ces instructions un ensemble de nouveaux registres, un par emplacement de pile actif au niveau de ces instructions. Ainsi, si i désigne le rang d'une cible de branchement dont le type de pile associée n'est pas vide et est du type tplᵢ à tpnᵢ avec n > 0, pile non vide, le processus de transformation alloue n nouveau registres, r₁ à rₙ non encore utilisés et les associe à l'instruction i correspondante. Cette opération est réalisée à l'étape 504a.

L'étape 504a est suivie d'une étape 504 consistant à examiner chaque instruction détectée de rang i et à discriminer en une étape de test 504 l'existence d'une cible de branchement CIB ou d'un branchement IB. L'étape 504 est représentée sous forme d'un test désigné par :
∃?CIB,IB et Iᵢ=CIB.

Dans le cas où l'instruction de rang i est une cible de branchement CIB représentée par l'égalité précédente, et que la pile des variables de pile au niveau de cette instruction n'est pas vide, c'est-à-dire en réponse positive au test 504, pour toute instruction précédente de rang i-1 constituée par un branchement, une levée d'exceptions ou un retour de programme, cette condition est réalisée à l'étape de test 505 désignée par :
Iᵢ₋₁ = IB, levée EXCEPT, retour Prog.
L'instruction détectée de rang i n'est accessible que par un branchement. Sur réponse positive au test 505 précité, le processus de transformation consiste à effectuer une étape 506 consistant à insérer un ensemble d'instructions de chargement du type load à partir de l'ensemble de nouveaux registres antérieurement à l'instruction détectée de rang i considéré. L'opération d'insertion 506 est suivie d'une redirection 507 de tous les branchements vers l'instruction détectée de rang i, vers la première instruction de chargement load insérée. Les opérations d'insertion et de redirection sont représentées au tableau T9 joint en annexe.

Pour toute instruction précédente de rang i-1 continuant en séquence, c'est-à-dire lorsque l'instruction courante de rang i est accessible à la fois par un branchement et à partir de l'instruction précédente, cette condition étant réalisée par le test 508 et symbolisée par les relations :
Iᵢ₋₁→Iᵢ
et
IB→Iᵢ
le processus de transformation consiste en une étape 509 à insérer un ensemble d'instructions de sauvegarde store vers l'ensemble de nouveaux registres antérieurement à l'instruction détectée de rang i, et un ensemble d'instructions de chargement load à partir de cet ensemble de nouveaux registres. L'étape 509 est alors suivie d'une étape 510 de redirection de tous les branchements vers l'instruction détectée de rang i vers la première instruction de chargement load insérée.

Dans le cas où l'instruction détectée de rang i est un branchement vers une instruction déterminée, pour toute instruction détectée de rang i constituée par un branchement inconditionnel, cette condition étant réalisée par un test 511 noté :
Iᵢ=IB_{incondit.}
le processus de transformation tel que représenté en figure 5a consiste à insérer à une étape 512, sur réponse positive au test 511, antérieurement à l'instruction détectée de rang i, une pluralité d'instructions de sauvegarde store. Le processus de transformation insère avant l'instruction i les n instructions store ainsi que représenté en exemple au tableau T11. Les instructions store adressent les registres r₁ à rₙ, n désignant le nombre de registres. A chaque nouveau registre est ainsi associée l'instruction de sauvegarde.

Pour toute instruction détectée de rang i constituée par un branchement conditionnel et pour un nombre mOp supérieur à 0 d'opérandes manipulés par cette instruction de branchement conditionnel, cette condition étant réalisée par le test 513 noté :
Iᵢ=IB_{condit.}
avec mOp > 0
le processus de transformation, en réponse positive au test 513 précité, consiste à insérer à une étape 514 antérieurement à cette instruction détectée de rang i, une instruction de permutation notée swap_x au sommet de la pile des variables de pile des mOp opérandes de l'instruction détectée de rang i et des n valeurs suivantes. Cette opération de permutation permet de ramener au sommet de la pile des variables de pile les n valeurs à sauvegarder dans l'ensemble des nouveaux registres r₁ à rₙ. L'étape 514 est suivie d'une étape 515 consistant à insérer antérieurement à l'instruction de rang i un ensemble d'instructions de sauvegarde store vers l'ensemble des nouveaux registres r₁ à rₙ. L'étape 515 d'insertion précitée est elle-même suivie d'une étape 516 d'insertion postérieurement à l'instruction détectée de rang i d'un ensemble d'instructions de chargement load à partir de l'ensemble des nouveaux registres r₁ à rₙ. L'ensemble des opérations d'insertion correspondantes est représenté au tableau 12 introduit en annexe.

Pour des raisons de complétude et en référence à la figure 5a, on indique que, sur réponse négative au test 504, la poursuite du processus de transformation est réalisée par une étape de suite de contexte suite 503, que la réponse négative aux tests, 505, 508, 511 et 513 est elle-même suivie d'une poursuite du processus de transformation par l'intermédiaire d'une étape de suite de contexte suite 503 et qu'il en est de même en ce qui concerne la poursuite des opérations après les étapes de redirection 507 et 510 et d'insertion 512 et 516 précitées.

Une description plus détaillée du procédé de normalisation et de transformation d'un code objet en un code objet normalisé faisant appel à des registres typés tel que décrit en figure 4b, sera maintenant donnée en liaison avec la figure 5b. Ce mode de réalisation concerne plus particulièrement un mode de réalisation préférentiel non limitatif de l'étape 601 de réallocation des registres par détection des registres d'origine employés avec des types différents.

En référence à la figure 5b précitée, on indique que l'étape 601 précitée consiste à déterminer en une étape 603 les intervalles de durée de vie notés IDⱼ de chaque registre rⱼ. Ces intervalles de durée de vie, désignés par *"live range"* ou *"webs"* en langage anglo-saxon, sont définis pour un registre r comme un ensemble maximal de traces partielles tel que le registre r est vivant en tous points de ces traces. Pour une définition plus détaillée de ces notions, on pourra utilement se reporter à l'ouvrage édité par Steven S. MUCHNICK intitulé "*Advanced Compiler Design and Implementation*", Section 16.3, Morgan KAUFMANN, 1997. L'étape 603 est désignée par la relation :
IDⱼ↔rⱼ
selon laquelle à chaque registre rⱼ est associé un intervalle de durée de vie IDⱼ correspondant.

L'étape 603 précitée est suivie d'une étape 604 consistant à déterminer, à l'étape 604, le type de données principal, noté tpⱼ, de chaque intervalle de durée de vie IDⱼ. Le type principal d'un intervalle de durée de vie IDⱼ, pour un registre rⱼ, est défini par la borne supérieure des types de donnée stockés dans ce registre rj par les instruction de sauvegarde store appartenant à l'intervalle de durée de vie précité.

L'étape 604 est elle-même suivie d'une étape 605 consistant à établir un graphe d'interférences entre les intervalles de durée de vie précédemment définis aux étapes 603 et 604, ce graphe d'interférences consistant en un graphe non orienté dont chaque sommet est constitué par un intervalle de durée de vie et dont les arcs, notés a_{j1,j2} sur la figure 5b, entre deux sommets IDⱼ₁ et ID_{J2}, existent si un sommet contient une instruction de sauvegarde adressée au registre de l'autre sommet ou réciproquement. Sur la figure 5b, la construction du graphe d'interférences est représentée symboliquement, cette construction pouvant être réalisée à partir de techniques de calcul connues de l'homme du métier. Pour une description plus détaillée de la construction de ce type de graphe, on pourra utilement se reporter à l'ouvrage publié par Alfred V.AHO, Ravi SETHI et Jeffrey D. ULLMAN intitulé *"Compilers : principles, techniques,* and tools", Addison-Wesley 1986, section 9.7.

Suite à l'étape 605, le procédé de normalisation tel que représenté en figure 5b consiste à traduire à une étape 606 l'unicité d'un type de donnée alloué à chaque registre rj dans le graphe d'interférences en ajoutant des arcs entre toutes paires de sommets du graphe d'interférences tant que deux sommets d'une paire de sommets n'ont pas le même type de données principal associé. On comprend que la traduction du caractère d'unicité d'un type de donnée alloué à chaque registre correspond bien entendu à la traduction et à la prise en compte du critère C4 dans le graphe d'interférences, critère mentionné précédemment dans la description. L'étape 606 précitée est alors suivie d'une étape 607 dans laquelle une instanciation du graphe d'interférences est effectuée, instanciation plus communément désignée par étape de coloriage du graphe d'interférences selon les techniques habituelles. Au cours de l'étape 607, le processus de transformation attribue à chaque intervalle de durée de vie IDⱼₖ un numéro de registre rk de telle manière que deux intervalles adjacents dans le graphe d'interférences reçoivent des numéros de registres différents.

Cette opération peut être réalisée à partir de tout processus adapté. A titre d'exemple non limitatif, on indique qu'un processus préférentiel peut consister :
a) à choisir un sommet de degré minimal dans le graphe d'interférences, le degré minimal étant défini comme un nombre de sommets adjacents minimal, et de le retirer du graphe. Cette étape peut être répétée jusqu'à ce que le graphe soit vide.
b) Chaque sommet précédemment retiré est réintroduit dans le graphe d'interférences dans l'ordre inverse de leur retrait, le dernier enlevé étant le premier réintroduit et successivement dans l'ordre inverse de l'ordre de retrait. Ainsi, à chaque sommet réintroduit, peut être attribué le plus petit numéro de registre qui est différent des numéros attribués à tous les sommets adjacents.
Enfin, par l'étape 602, représentée en figure 4b, le processus de transformation et de réallocation réécrit les instructions d'accès aux registres figurant dans le code du sous-programme de l'appliquette considérée. Un accès à un registre donné dans l'intervalle de durée de vie correspondant est remplacé par un accès à un registre différent dont le numéro a été attribué pendant la phase d'instanciation encore désignée par phase de coloriage.

Une description plus détaillée d'un système informatique embarqué permettant la mise en oeuvre du protocole de gestion et du processus de vérification d'un fragment de programme ou appliquette conforme à l'objet de la présente invention et d'un système de développement d'une appliquette sera maintenant donnée en liaison avec la figure 6.

En ce qui concerne le système embarqué correspondant portant la référence 10, on rappelle que ce système embarqué est un système du type reprogrammable comportant les éléments essentiels tels que représentés en figure 1b. Le système embarqué précité est réputé interconnecté à un terminal par une liaison série, le terminal étant lui-même relié par exemple par l'intermédiaire d'un réseau local, le cas échéant d'un réseau lointain, à un ordinateur de développement de l'appliquette portant la référence 20. Sur le système embarqué 10 fonctionne un programme principal qui lit et exécute les commandes envoyées sur la liaison série par le terminal. En outre, les commandes standard pour une carte à microprocesseur, telles que par exemple les commandes standard du protocole ISO 7816, peuvent être mises en oeuvre, le programme principal reconnaissant de plus deux commandes supplémentaires, l'une pour le téléchargement d'une appliquette, et l'autre pour la sélection d'une appliquette préalablement chargée sur la carte à microprocesseur.

Conformément à l'objet de la présente invention, la structure du programme principal est réalisée de manière à comporter au moins un module de programme de gestion et de vérification d'un fragment de programme téléchargé suivant le protocole de gestion d'un fragment de programme téléchargé précédemment décrit dans la description en liaison avec la figure 2.

En outre, le module de programme comporte également un module de sous-programme de vérification d'un fragment de programme téléchargé suivant le procédé de vérification tel que décrit précédemment dans la description en liaison avec les figures 3a à 3j.

Dans ce but, la structure des mémoires, en particulier de la mémoire permanente non inscriptible, mémoire ROM, est modifiée de manière à comporter notamment, outre le programme principal, un module 17 de gestion de protocole et de vérification, ainsi que mentionné précédemment. Enfin, en ce qui concerne la mémoire non volatile réinscriptible de type EEPROM, celle-ci comporte avantageusement un répertoire d'appliquettes, noté 18, permettant la mise en oeuvre du protocole de gestion et du processus de vérification objets de la présente invention.

En référence à la même figure 6, on indique que le système de développement de l'appliquette conforme à l'objet de la présente invention, permettant en fait la transformation d'un code objet classique ainsi que mentionné précédemment dans la description et satisfaisant aux critères C1+C2+C'3+C'4 dans le cadre de l'environnement Java en un code objet normalisé pour le même fragment de programme comprend, associé à un compilateur classique Java 21, un module de transformation de code, noté 22, lequel procède à la transformation de code en code normalisé selon le premier et le deuxième mode de réalisation précédemment décrits dans la description en liaison avec les figures 4a, 4b et 5a, 5b. On comprend en effet que, d'une part, la normalisation du code objet d'origine en un code objet normalisé à instruction de branchement à pile vide et en un code normalisé faisant appel à des registres typés, d'autre part, ainsi que mentionné précédemment dans la description, permet de satisfaire aux critères de vérification C3 et C4 imposés par le procédé de vérification objet de la présente invention.

Le module de transformation de code 22 est suivi d'un convertisseur JavaCard 23, lequel permet d'assurer la transmission par un réseau distant ou local vers le terminal et, par l'intermédiaire de la liaison série, vers la carte à microprocesseur 10. Ainsi, le système de développement de l'appliquette 20 représenté en figure 6 permet de transformer les fichiers de classe compilés produits par le compilateur Java 21 à partir des codes source Java de l'appliquette en des fichiers de classe équivalents mais qui respectent les contraintes supplémentaires C3, C4 imposées par le protocole de gestion et le module de vérification 17 embarqués sur la carte à microprocesseur 10. Ces fichiers de classe transformés sont convertis en une appliquette téléchargeable sur la carte par le convertisseur JavaCard standard 23.

Différents éléments particulièrement remarquables de l'ensemble des éléments du protocole, des procédés et des systèmes objets de la présente invention, seront maintenant donnés à titre indicatif.

Vis-à-vis des processus de vérification de l'art antérieur tels que mentionnés dans l'introduction à la description, le procédé de vérification objet de la présente invention apparaît remarquable en ce qu'il concentre l'effort de vérification sur les propriétés de typage des opérandes qui sont essentielles à la sécurité de l'exécution de chaque appliquette, c'est-à-dire du respect des contraintes de type associées à chaque instruction et absence de débordement de pile. D'autres vérifications n'apparaissent pas essentielles en termes de sécurité, en particulier la vérification que le code initialise correctement chaque registre avant de le lire pour la première fois. Le procédé de vérification objet de la présente invention opère au contraire par initialisation à zéro de tous les registres à partir de la machine virtuelle lors de l'initialisation de la méthode afin de garantir que la lecture d'un registre non initialisé ne peut compromettre la sécurité de la carte.

En outre, l'exigence imposée par le procédé de vérification objet de la présente invention selon laquelle la pile doit être vide à chaque instruction de branchement ou de cible de branchement, garantit que la pile est dans le même état, vide, après exécution du branchement et avant exécution de l'instruction à laquelle le programme s'est branché. Ce mode opératoire garantit que la pile est dans un état cohérent, quel que soit le chemin d'exécution suivi à travers le code du sous-programme ou de l'appliquette considéré. La cohérence de la pile est ainsi garantie, même en présence de branchement ou de cible de branchement. Contrairement aux procédés et aux systèmes de l'art antérieur, dans lesquels il est nécessaire de conserver en mémoire vive le type de la pile à chaque cible de branchement, ce qui nécessite une quantité de mémoire vive proportionnelle à TpxNb, produit de la taille maximale de pile d'exécution utilisée et du nombre de cibles de branchement dans le code, le procédé de vérification, objet de la présente invention, n'a besoin que du type de la pile d'exécution lors de l'instruction en cours de vérification et il ne conserve pas en mémoire le type de cette pile à d'autres points du code. En conséquence, le procédé objet de l'invention se contente d'une quantité de mémoire vive proportionnelle à Tp mais indépendante de Nb, et par conséquent de la longueur du code du sous-programme ou de l'appliquette.

L'exigence selon le critère C4, selon lequel un registre donné doit être utilisé avec un seul et même type dans tout le code d'un sous-programme, garantit que le code précité n'utilise pas un registre de manière incohérente, par exemple en y écrivant un entier short à un point du programme et en le relisant comme une référence d'objet à un autre point du programme.

Dans les processus de vérification décrits dans l'art antérieur, en particulier dans la spécification Java intitulée *"The Java Virtual Machine Spécification"* éditée par Tim LINDHOLM et Frank YELLIN, déjà citée, pour garantir la cohérence des utilisations précitées à travers les instructions de branchement, il est nécessaire de conserver en mémoire vive une copie du tableau des types de registres à chaque cible de branchement. Cette opération nécessite une quantité de mémoire vive proportionnelle à TᵣxN_{b} où Tᵣ désigne le nombre de registres utilisés par le sous-programme et N_{b} le nombre de cibles de branchement dans le code de ce sous-programme.

Au contraire, le processus de vérification objet de la présente invention, opère sur un tableau global de types de registres en l'absence de conservation en mémoire vive de copie à différents points du code. En conséquence, la mémoire vive nécessaire pour réaliser le processus de vérification est proportionnelle à Tᵣ mais indépendante de N_{b} et donc de la longueur du code du sous-programme considéré.

La contrainte selon laquelle un registre donné est utilisé avec le même type en tous points, c'est-à-dire en toute instruction du code considéré, simplifie sensiblement et de manière significative la vérification des sous-programmes. Au contraire, dans les processus de vérification de l'art antérieur, en l'absence d'une telle contrainte, le processus de vérification doit établir que les sous-programmes respectent une discipline de pile stricte et doit vérifier le corps des sous-programmes de manière polymorphe en ce qui concerne le type de certains registres.

En conclusion, le processus de vérification objet de la présente invention vis-à-vis des techniques de l'art antérieur permet, d'une part, de réduire la taille du code du programme permettant de conduire le procédé de vérification, et, d'autre part, de réduire la consommation de mémoire vive lors des opérations de vérification, le degré de complexité étant de la forme O(Tₚ+Pᵣ) dans le cas du processus de vérification objet de la présente invention, au lieu de (O(Tₚ+Tᵣ)xN_{b}) pour ce qui concerne les processus de vérification de l'art antérieur, en offrant toutefois les mêmes garanties vis-à-vis de la sûreté de l'exécution du code vérifié.

Enfin, le processus de transformation d'un code classique d'origine en un code normalisé est réalisé par transformation localisée du code en l'absence de transmission d'informations supplémentaires à l'organe vérificateur, c'est-à-dire à la carte à microprocesseur ou au système informatique embarqué.

En ce qui concerne le procédé de réallocation des registres tel que décrit en figures 4b et 5b, ce procédé se distingue des procédés connus de l'art antérieur décrits notamment par le brevet US 4,571,678 et par le brevet US 5,249,295, par le fait :
- que la réallocation de registre assure qu'un même registre ne peut être attribué à deux intervalles possédant des types principaux différents, ce qui garantit ainsi qu'un registre donné est utilisé avec le même type dans tout le code ; et
- que les algorithmes d'allocations de registres existants et décrits dans les documents précités supposent un nombre fixe de registres et tentent de minimiser les transferts désignés par *"spills"* en langage anglo-saxon, entre registres et pile, alors que la réallocation des registres conformément à l'objet de la présente invention opère dans un cadre où le nombre total de registres est variable, en conséquence de quoi il n'y a pas lieu d'effectuer des transferts entre registres et piles alors qu'un processus de minimisation du nombre total de registres est mis en oeuvre.

Le protocole de gestion d'un fragment de programme téléchargé sur un système embarqué et les procédés de vérification de ce fragment de programme téléchargé, respectivement de transformation de ce code objet de fragment de programme téléchargé, objets de la présente invention, peuvent bien entendu être mis en oeuvre de manière logicielle.

A ce titre, l'invention concerne également un produit programme d'ordinateur chargeable directement dans la mémoire interne d'un système embarqué reprogrammable, ce système embarqué permettant le téléchargement d'un fragment de programme constitué par un code objet, suite d'instructions, exécutable par le microprocesseur du système embarqué par l'intermédiaire d'une machine virtuelle munie d'une pile d'exécution et de registres ou variables locales manipulés par ces instructions afin de permettre l'interprétation de ce code objet. Le produit programme d'ordinateur correspondant comprend des portions de code objet pour l'exécution du protocole de gestion d'un fragment de programme téléchargé sur ce système embarqué, ainsi qu'illustré sur la figure 2 et la figure 6 précédemment décrites dans la description, lorsque ce système embarqué est interconnecté à un terminal et que ce programme est exécuté par le microprocesseur de ce système embarqué par l'intermédiaire de la machine virtuelle.

L'invention concerne également un produit programme d'ordinateur chargeable directement dans la mémoire interne d'un système embarqué reprogrammable, tel qu'une carte à microprocesseur munie d'une mémoire réinscriptible, ainsi qu'illustré en liaison avec la figure 6. Ce produit programme d'ordinateur comprenant des portions de code objet pour l'exécution des étapes de vérification d'un fragment d'un programme téléchargé sur ce système embarqué, ainsi qu'illustré et décrit précédemment dans la description en liaison avec les figures 3a à 3j. Cette vérification est exécutée lorsque ce système embarqué est interconnecté à un terminal et que ce programme est exécuté par le microprocesseur de ce système embarqué par l'intermédiaire de la machine virtuelle.

L'invention concerne également un produit programme d'ordinateur ; ce produit programme d'ordinateur comprend des portions de code objet pour l'exécution des étapes du procédé de transformation du code objet d'un fragment de programme en un code objet normalisé pour ce même fragment de programme, ainsi qu'illustré et représenté aux figures 4a, 4b, respectivement 5a, 5b, ainsi qu'à la figure 6 et décrites précédemment dans la description.

La présente invention concerne également un produit programme d'ordinateur enregistré sur un support utilisable dans un système embarqué reprogrammable, une carte à microprocesseur munie d'une mémoire réinscriptible par exemple, ce système embarqué permettant le téléchargement d'un fragment de programme constitué par un code objet exécutable par ce microprocesseur, par l'intermédiaire d'une machine virtuelle munie d'une pile d'exécution et de registres ou variables locales manipulés par ces instructions, afin de permettre l'interprétation de ce code objet. Le produit programme d'ordinateur précité comprend, au moins, un module de programmes lisibles par le microprocesseur du système embarqué par l'intermédiaire de la machine virtuelle, pour commander l'exécution d'une procédure de gestion du téléchargement d'un fragment de programme téléchargé, ainsi que représenté en figure 2 et décrit précédemment dans la description, un module de programmes lisibles par le microprocesseur par l'intermédiaire de la machine virtuelle pour commander l'exécution d'une procédure de vérification instruction par instruction du code objet constitutif du fragment de programme, ainsi qu'illustré et décrit en relation avec les figures 3a à 3j dans la description précédente, et un module de programmes lisibles par le microprocesseur de ce système embarqué par l'intermédiaire de la machine virtuelle pour commander l'exécution d'un fragment de programme téléchargé suite à ou en l'absence d'une transformation du code objet de ce fragment de programme en code objet normalisé pour ce même fragment de programme, ainsi que représenté en figure 2.

Le produit programme d'ordinateur précité comprend également un module de programmes lisibles par le microprocesseur par l'intermédiaire de la machine virtuelle pour commander l'inhibition de l'exécution, sur le système embarqué, du fragment de programme dans le cas d'une procédure de vérification non réussie de fragment de programme précité, ainsi qu'illustré et décrit précédemment dans la description en liaison avec la figure 2.

### ANNEXES

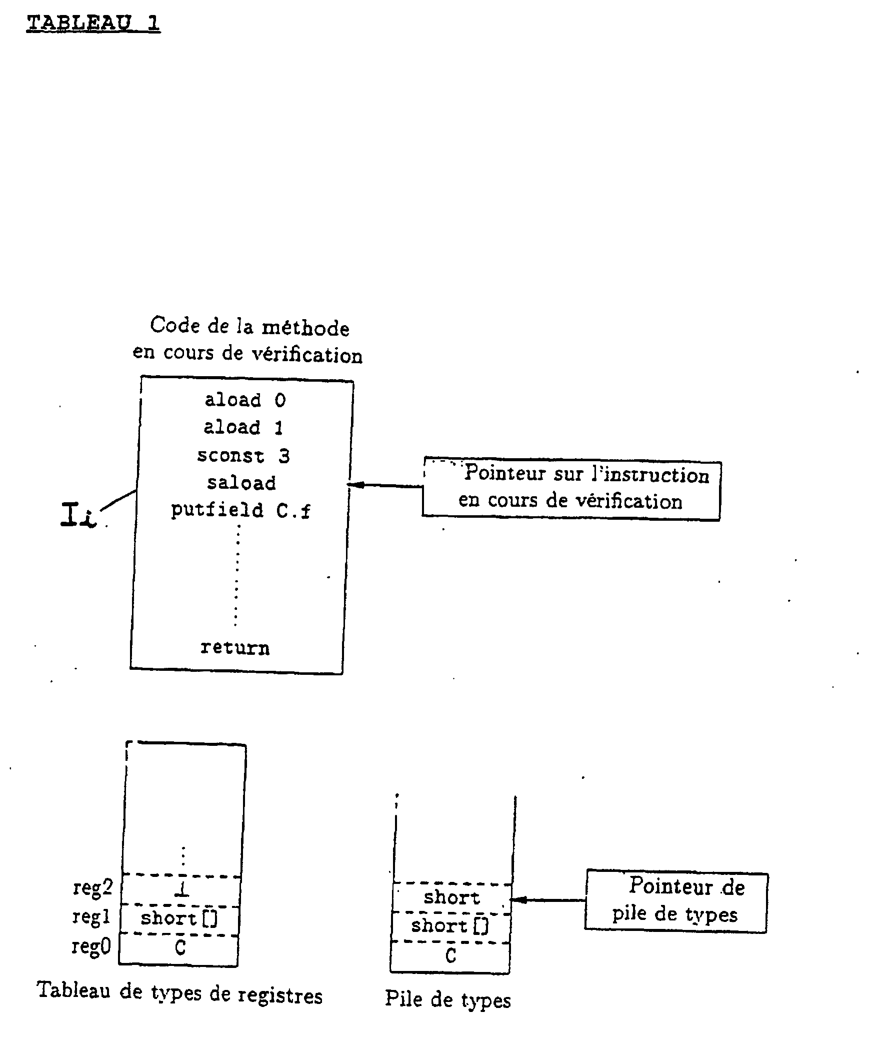

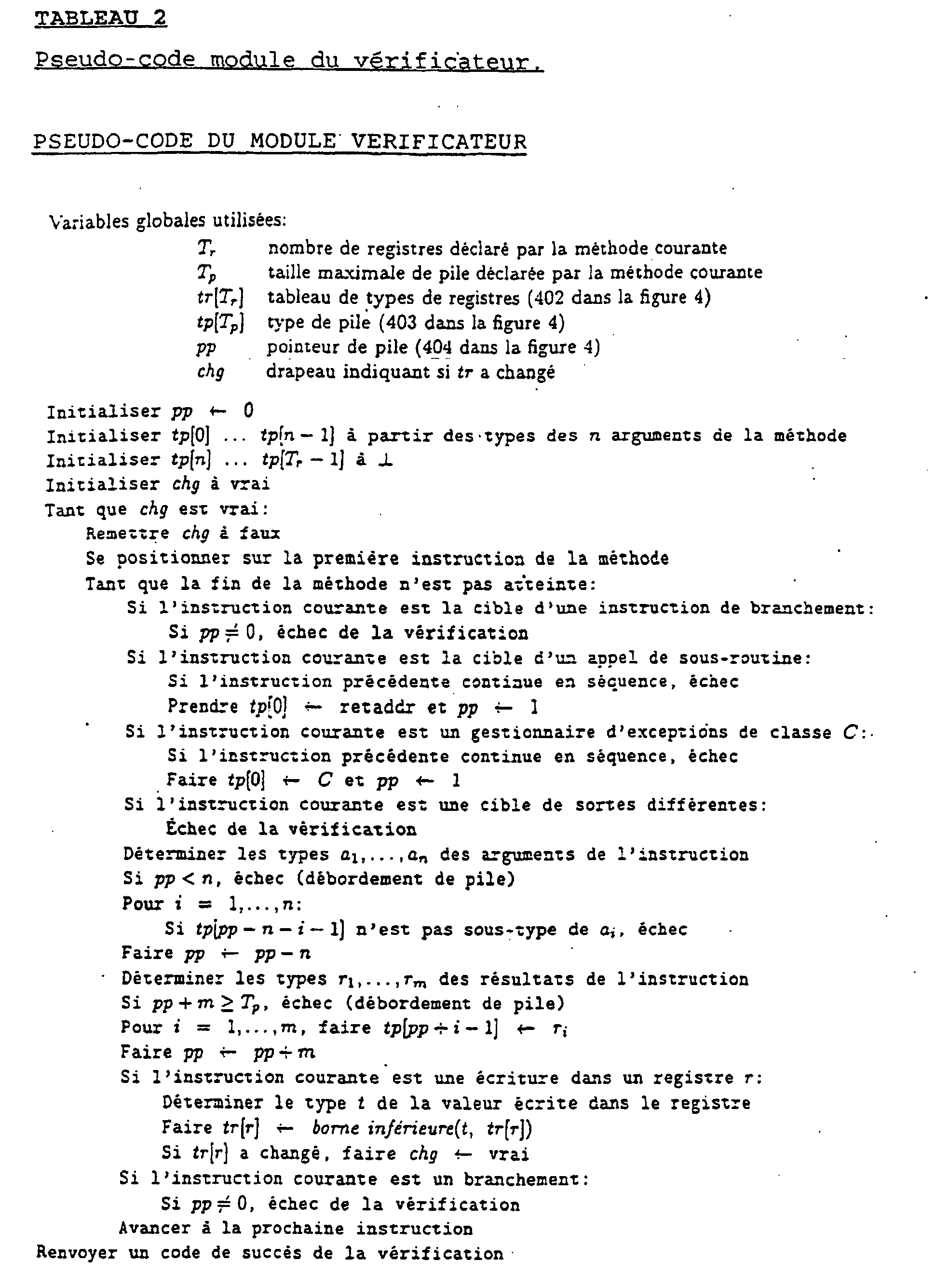

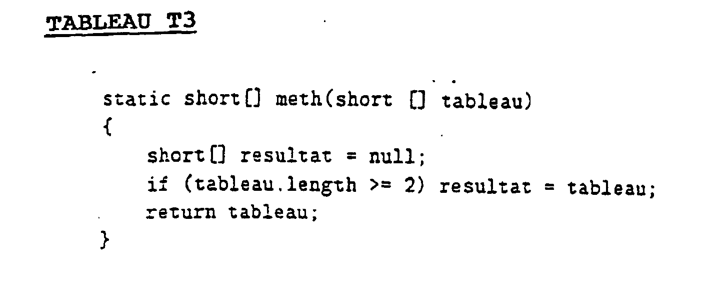

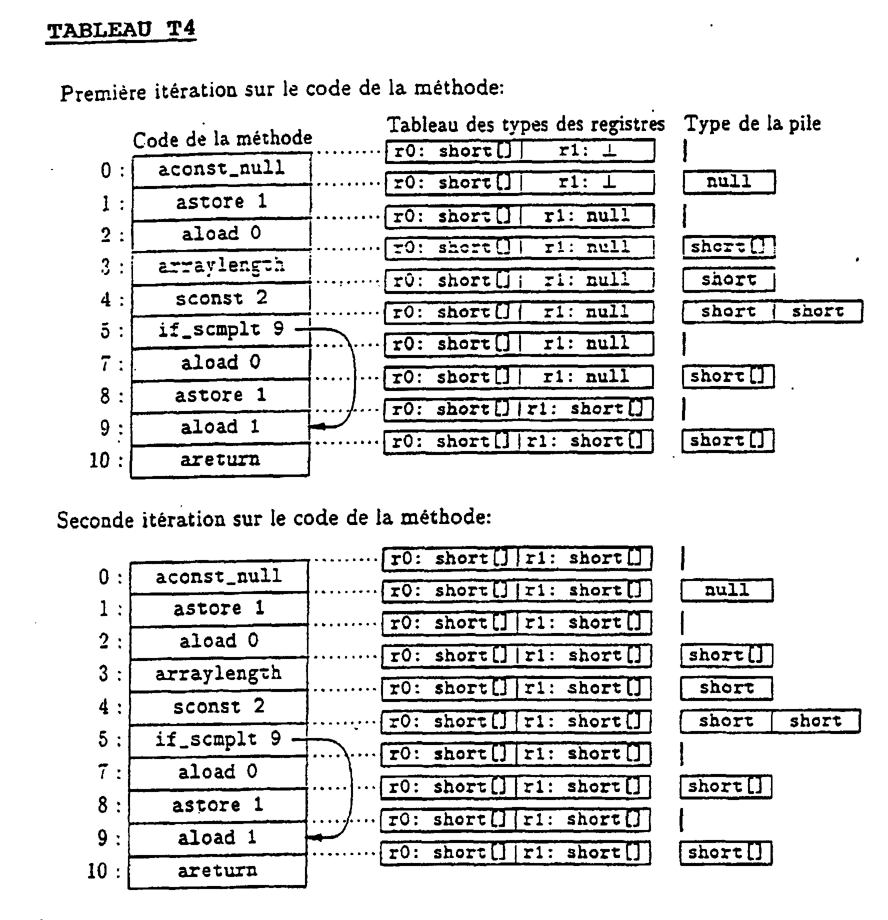

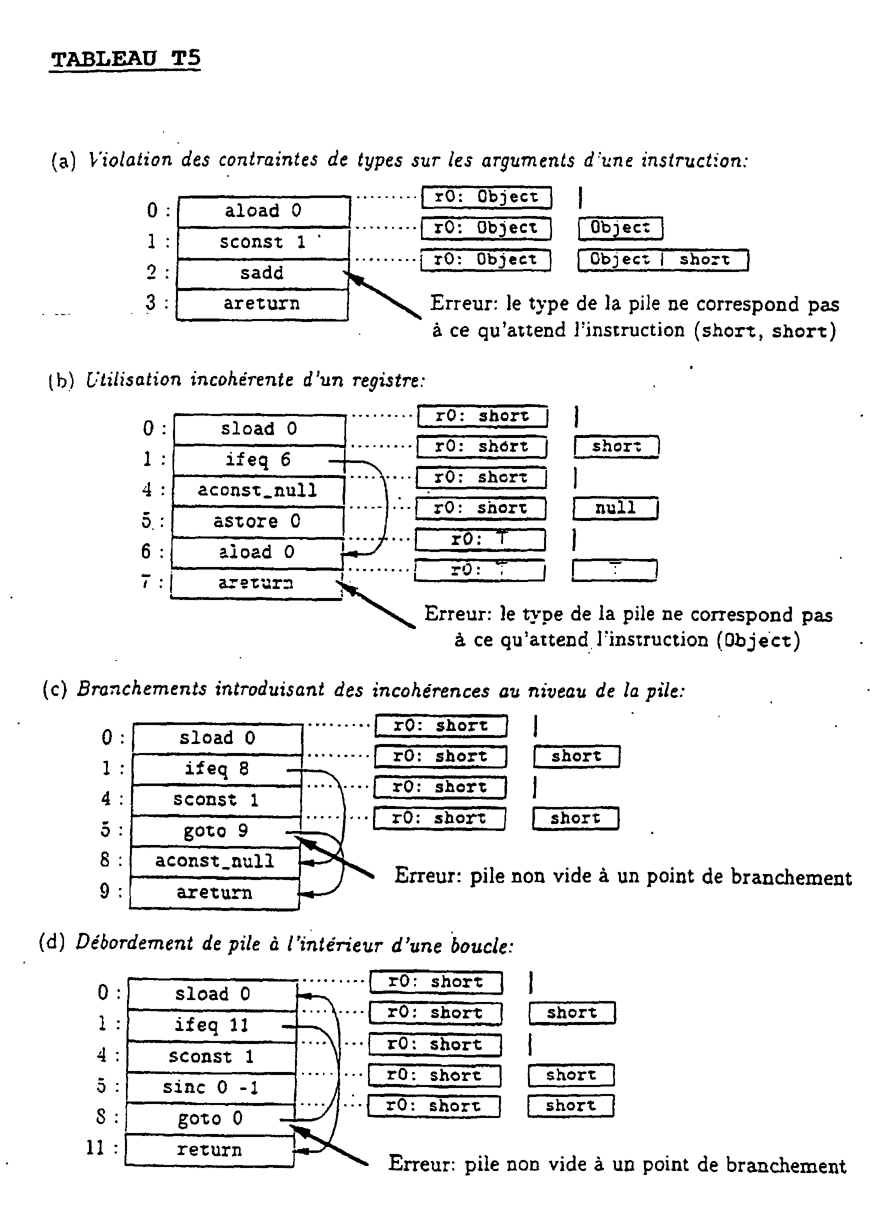

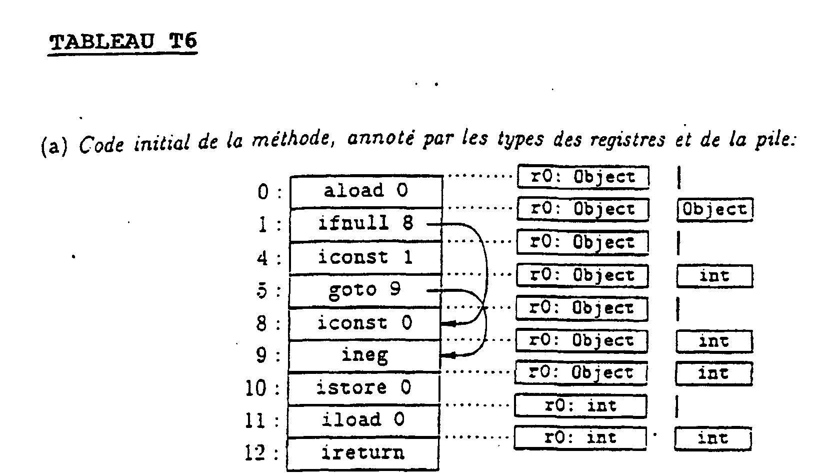

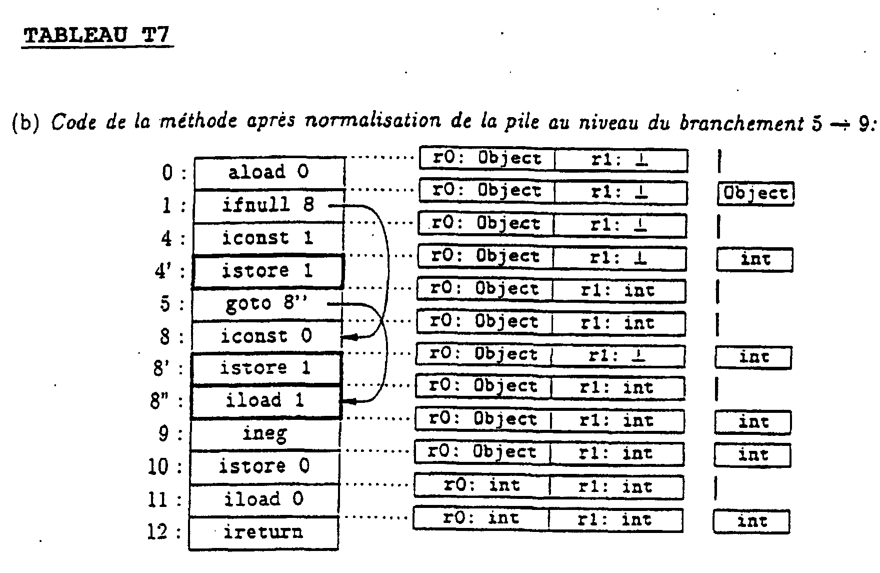

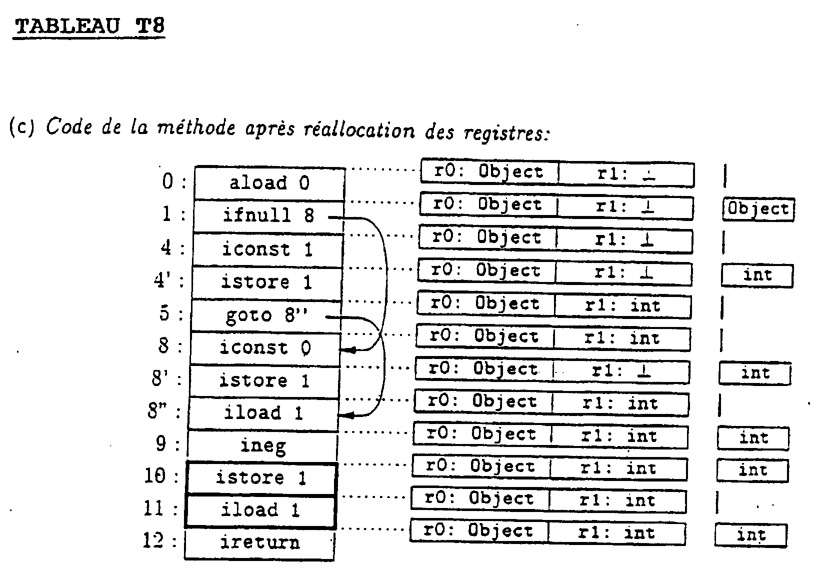

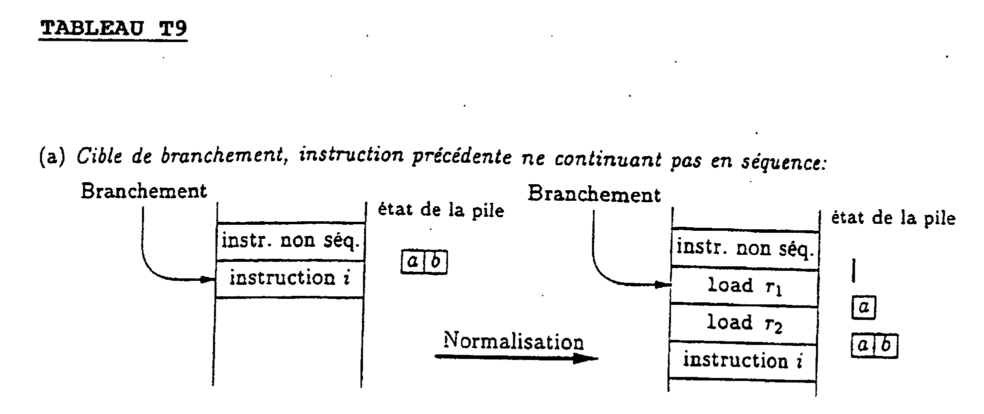

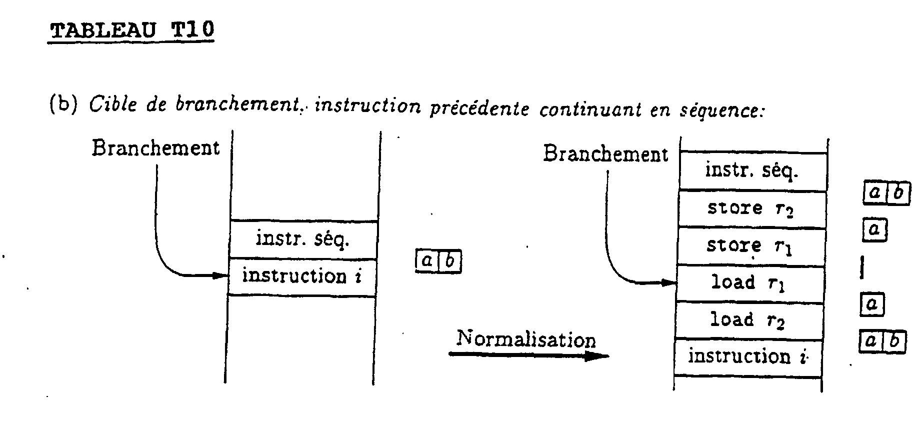

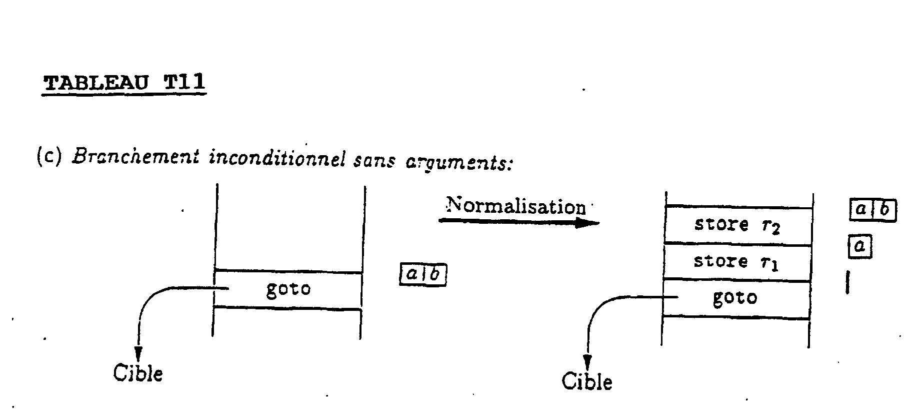

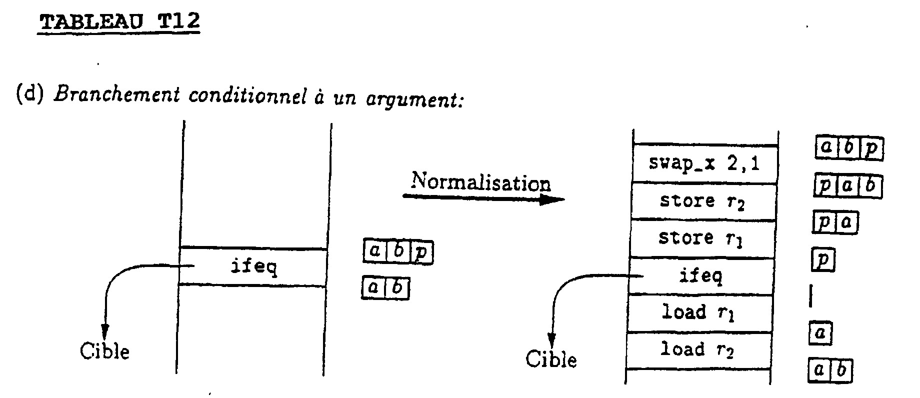

## Revendications

1. Protocole de gestion d'un fragment de programme téléchargé sur un système embarqué reprogrammable, tel qu'une carte à microprocesseur munie d'une mémoire réinscriptible, ledit fragment de programme étant constitué par un code objet, suite d'instructions, exécutable par le microprocesseur du système embarqué par l'intermédiaire d'une machine virtuelle munie d'une pile d'exécution et de registres ou variables locales manipulées par ces instructions et permettant d'interpréter ce code objet, ledit système embarqué étant interconnecté à un terminal, **caractérisé en ce que** ce protocole consiste au moins, au niveau dudit système embarqué :
a) à détecter une commande de téléchargement de ce fragment de programme ; et sur réponse positive à cette étape consistant à détecter une commande de téléchargement,
b) à lire le code objet constitutif de ce fragment de programme et à mémoriser temporairement ce code objet ;
c) à soumettre l'ensemble du code objet mémorisé temporairement à un processus de vérification instruction par instruction, ce processus de vérification consistant au moins en une étape d'initialisation de la pile des types à un état vide et du tableau des types de registres à un type représentant l'intersection de tous les types de données, représentant l'état de ladite machine virtuelle au début de l'exécution du code objet mémorisé temporairement et en une succession d'étapes de vérification instruction par instruction, par discrimination de l'existence, pour chaque instruction courante, d'une cible, cible d'instruction de branchement, cible d'un appel d'un gestionnaire d'exceptions ou cible d'un appel de sous-routine et par une vérification et une actualisation de l'effet de ladite instruction courante sur la pile des types et sur le tableau des types de registres, et, dans le cas d'une vérification réussie dudit code objet,
d) à enregistrer le fragment de programme téléchargé dans un répertoire de fragments de programmes disponibles, et, dans le cas d'une vérification non réussie dudit code objet,
e) à inhiber l'exécution, sur ledit système embarqué, dudit fragment de programme.

2. Protocole selon la revendication 1, **caractérisé en ce que** ladite étape e) d'inhibition de l'exécution consiste :
f) à effacer le fragment de programme enregistré momentanément, en l'absence d'enregistrement. de ce dernier dans ledit répertoire de fragments de programmes disponibles, et
g) à adresser audit lecteur un code d'erreur.

3. Protocole selon la revendication 1 ou 2, **caractérisé en ce que**, sur réponse négative à ladite étape a) consistant à détecter une commande de téléchargement, celui-ci consiste :
b') à détecter une commande de sélection d'un fragment de programme disponible dans un répertoire de fragments de programmes ; et, sur réponse positive à cette étape consistant à détecter une commande de sélection d'un fragment de programme disponible ;
c') à appeler ledit fragment de programme disponible sélectionné ;
d') à exécuter ledit fragment de programme disponible appelé par l'intermédiaire de la machine virtuelle, en l'absence de toute vérification dynamique de types de variables, des droits d'accès aux objets manipulés par le fragment de programme disponible appelé, du débordement de la pile d'exécution lors de l'exécution de chaque instruction, et, sur réponse négative à cette étape consistant à détecter une commande de sélection d'un fragment de programme disponible,
e') à procéder au traitement des commandes standards du système embarqué.

4. Procédé de vérification d'un fragment de programme téléchargé sur un système embarqué reprogrammable, tel qu'une carte à microprocesseur munie d'une mémoire réinscriptible, ledit fragment de programme étant constitué par un code objet et comportant au moins un sous-programme, suite d'instructions, exécutable par le microprocesseur du système embarqué par l'intermédiaire d'une machine virtuelle munie d'une pile d'exécution et de registres d'opérandes manipulés par ces instructions et permettant d'interpréter ce code objet, ledit système embarqué étant interconnecté à un lecteur, **caractérisé en ce que** ledit procédé consiste, suite à la détection d'une commande de téléchargement et à la mémorisation dudit code objet constitutif de ce fragment de programme dans ladite mémoire réinscriptible, pour chaque sous-programme :
α) à effectuer une étape d'initialisation de la pile des types à un état vide et du tableau des types de registres à un type représentant l'intersection de tous les types de données, représentant l'état de la machine virtuelle au début de l'exécution du code objet mémorisé temporairement ;
β) à effectuer une vérification dudit code objet mémorisé temporairement instruction par instruction, par discrimination de l'existence, pour chaque instruction courante, d'une cible, cible d'instruction de branchement, cible d'un appel d'un gestionnaire d'exceptions ou cible d'un appel de sous-routine ;
γ) à effectuer une vérification et une actualisation de l'effet de ladite instruction courante sur les types de données de ladite pile des types et dudit tableau des types de registres, en fonction de l'existence d'une cible d'instruction de branchement, d'une cible d'un appel de sous-routine ou d'une cible d'un appel de gestionnaire d'exceptions, ladite vérification étant réussie lorsque le tableau des types de registres n'est pas modifié au cours d'une vérification de toutes les instructions et le processus de vérification étant poursuivi instruction par instruction jusqu'à ce que le tableau des types de registres soit stable, en l'absence de modification, le processus de vérification étant interrompu sinon.

5. Procédé de vérification selon la revendication 4, **caractérisé en ce que** les types de variables manipulées au cours du processus de vérification comprennent au moins :
- des identificateurs de classes correspondant aux classes d'objets définies dans le fragment de programme ;
- des types de variables numériques comportant au moins un type short, entier codé sur p bits, et un type retaddr d'adresse de retour d'une instruction de saut JSR ;
- un type null relatif à des références d'objets nulles ;
- un type object relatif aux objets ;
- un premier type spécifique ⊥, représentant l'intersection de tous les types et correspondant à la valeur 0, nil ;
- un deuxième type spécifique T, représentant l'union de tous les types et correspondant à tout type de valeur.

6. Procédé selon la revendication 5, **caractérisé en ce que** l'ensemble desdits types de variables vérifie une relation de sous-typage :
object ∈ T;
short, retaddr ∈ T;
⊥ ∈ null, short, retaddr.

7. Procédé selon l'une des revendications 4 à 6, **caractérisé en ce que** lorsque ladite instruction courante est la cible d'une instruction de branchement, ledit procédé de vérification consiste à vérifier que la pile des types est vide, le processus de vérification étant poursuivi pour l'instruction suivante dans le cas d'une vérification positive, et, le processus de vérification échouant et le fragment de programme étant rejeté sinon.

8. Procédé selon l'une des revendications 4 à 7, **caractérisé en ce que** lorsque ladite instruction courante est la cible d'un appel de sous-routine, ledit processus de vérification vérifie que l'instruction précédente constitue un branchement inconditionnel, un retour de sous-routine ou une levée d'exception, ledit processus de vérification, en cas de vérification positive, procédant à une réactualisation de la pile des types de variables par une entité de type retaddr, adresse de retour de la sous-routine, et, le processus de vérification échouant et le fragment de programme étant rejeté sinon.

9. Procédé selon l'une des revendications 4 à 8, **caractérisé en ce que** lorsque l'instruction courante est la cible d'un gestionnaire d'exceptions, ledit processus de vérification vérifie que l'instruction précédente constitue un branchement inconditionnel, un retour de sous-routine ou une levée d'exception, ledit processus de vérification, en cas de vérification positive, procédant à une réactualisation de la pile des types par une entrée du type des exceptions, et, le processus de vérification échouant et le fragment de programme étant rejeté sinon.

10. Procédé selon l'une des revendications 4 à 9, **caractérisé en ce que** lorsque l'instruction courante est la cible d'une pluralité de branchements incompatibles, le processus de vérification échoue et le fragment de programme est rejeté.

11. Procédé selon l'une des revendications 4 à 10, **caractérisé en ce que** lorsque l'instruction courante n'est la cible d'aucun branchement, le processus de vérification continue par passage à une réactualisation de la pile des types.

12. Procédé selon l'une des revendications 4 à 11, **caractérisé en ce que** l'étape de vérification de l'effet de l'instruction courante sur la pile des types comporte au moins :
- une étape de vérification que la pile d'exécution des types contient au moins autant d'entrées que l'instruction courante comporte d'opérandes ;
- une étape de dépilement et de vérification que les types des entrées au sommet de la pile sont sous-types des types des opérandes de cette instruction ;
- une étape de vérification de l'existence d'un espace mémoire suffisant sur la pile des types pour procéder à l'empilement des résultats de l'instruction courante ;
- une étape d'empilement sur la pile des types de données attribués à ces résultats.

13. Procédé selon la revendication 12, **caractérisé en ce que** lorsque l'instruction courante est une instruction de lecture d'un registre d'adresse n, le processus de vérification consiste :
- à vérifier le type de donnée du résultat de cette lecture par consultation de l'entrée n du tableau des types de registres ;
- à déterminer l'effet de l'instruction courante sur la pile des types par dépilement des entrées de la pile correspondant aux opérandes de cette instruction courante et par empilement du type de données de ce résultat.

14. Procédé selon la revendication 12, **caractérisé en ce que** lorsque l'instruction courante est une instruction d'écriture d'un registre d'adresse m, le processus de vérification consiste :
- à déterminer l'effet de l'instruction courante sur la pile des types et le type t de l'opérande écrit dans ce registre d'adresse m ;
- à remplacer l'entrée de type du tableau des types de registres à l'adresse m par le type immédiatement supérieur au type précédemment stocké et au type t de l'opérande écrit dans ce registre d'adresse m.

15. Procédé de transformation d'un code objet d'un fragment de programme, dans lequel les opérandes de chaque instruction appartiennent aux types de données manipulées par cette instruction, la pile d'exécution ne présente pas de phénomène de débordement, pour chaque instruction de branchement le type des variables de pile au niveau de ce branchement est le même qu'au niveau des cibles de ce branchement, en un code objet normalisé pour ce même fragment de programme, dans lequel les opérandes de chaque instruction appartiennent aux types de données manipulées par cette instruction, la pile d'exécution ne présente pas de phénomène de débordement, la pile d'exécution est vide à chaque instruction de branchement et à chaque instruction de cible de branchement, **caractérisé en ce que** ce procédé consiste, pour l'ensemble des instructions dudit code objet :
- à annoter chaque instruction courante par le type de données de la pile avant et après l'exécution de cette instruction, les données d'annotation étant calculées au moyen d'une analyse du flot des données relatif à cette instruction ;
- à détecter au sein desdites instructions et de chaque instruction courante l'existence de branchements respectivement de cibles de branchements pour lesquels ladite pile d'exécution n'est pas vide, l'opération de détection étant conduite à partir des données d'annotation du type des variables de pile allouées à chaque instruction courante, et en présence d'une détection d'une pile d'exécution non vide,
- à insérer des instructions de transfert des variables de pile de part et d'autre de ces branchements respectivement de ces cibles de branchements afin de vider le contenu de la pile d'exécution dans des registres temporaires avant ce branchement et de rétablir la pile d'exécution à partir desdits registres temporaires après ce branchement, et à n'insérer aucune instruction de transfert sinon, ce qui permet d'obtenir un code objet normalisé pour ce même fragment de programme, dans lequel la pile d'exécution est vide à chaque instruction de branchement et à chaque instruction de cible de branchement, en l'absence de modification de l'exécution dudit fragment de programme.

16. Procédé de transformation d'un code objet d'un fragment de programme, dans lequel les opérandes de chaque instructions appartiennent aux types de données manipulées par cette instruction, et un opérande de type déterminé écrit dans un registre par une instruction de ce code objet est relu depuis ce même registre par une autre instruction de ce code objet avec le même type de donnée déterminé, en un code objet normalisé pour ce même fragment de programme, dans lequel les opérandes de chaque instruction appartiennent aux types de données manipulées par cette instruction, un seul et même type de donnée étant alloué à un même registre dans tout ledit code objet normalisé, **caractérisé en ce que** ce procédé consiste, pour l'ensemble des instructions dudit code objet :
- à annoter chaque instruction courante par le type de donnée des registres avant et après l'exécution de cette instruction, les données d'annotation étant calculées au moyen d'une analyse du flot des données relatif à cette instruction ;
- à effectuer une réallocation des registres par détection des registres d'origine employés avec des types différents, division de ces registres d'origine en registres normalisés distincts, un registre normalisé pour chaque type de donnée utilisé, et une réactualisation des instructions qui manipulent les opérandes qui font appel auxdits registres normalisés.

17. Procédé selon la revendication 15, **caractérisé en ce que** l'étape consistant à détecter au sein desdites instructions et de chaque instruction courante l'existence de branchements respectivement de cibles de branchement pour laquelle la pile d'exécution n'est pas vide consiste, suite à la détection de chaque instruction de rang i correspondant :
- à associer à chaque instruction de rang i un ensemble de nouveaux registres, un nouveau registre étant associé à chaque variable de pile active au niveau de cette instruction ;
- à examiner chaque instruction détectée de rang i et à discriminer l'existence d'une cible de branchement respectivement d'un branchement, et dans le cas où l'instruction de rang i est une cible de branchement et que la pile d'exécution au niveau de cette instruction n'est pas vide,
• pour toute instruction précédente, de rang i-1, constituée par un branchement, une levée d'exception ou un retour de programme, l'instruction détectée de rang i n'étant accessible que par un branchement,
•• à insérer un ensemble d'instructions de chargement load à partir de l'ensemble de nouveaux registres antérieurement à ladite instruction détectée de rang i, avec redirection de tous les branchements vers l'instruction détectée de rang i vers la première instruction de chargement load insérée ; et
• pour toute instruction précédente, de rang i-1, continuant en séquence, l'instruction détectée de rang i étant accessible à la fois par l'intermédiaire d'un branchement et de l'instruction précédente de rang i-1,
•• à insérer un ensemble d'instructions de sauvegarde store vers l'ensemble de nouveaux registres antérieurement à ladite instruction détectée de rang i et un ensemble d'instructions de chargement load à partir de cet ensemble de nouveaux registres, avec redirection de tous les branchements vers l'instruction détectée de rang i vers la première instruction de chargement load insérée, et, dans le cas où ladite instruction détectée de rang i est un branchement vers une instruction déterminée,
• pour toute instruction détectée de rang i constituée par un branchement inconditionnel,
•• à insérer antérieurement à l'instruction détectée de rang i une pluralité d'instructions de sauvegarde store, à chaque nouveau registre étant associée une instruction de sauvegarde ; et
• pour toute instruction détectée de rang i constituée par un branchement conditionnel et pour un nombre m > 0 d'opérandes manipulés par cette instruction de branchement conditionnel,
•• à insérer antérieurement à cette instruction. détectée de rang i une instruction de permutation, swap-x, au sommet de la pile d'exécution des m opérandes de l'instruction détectée de rang i et des n valeurs suivantes, cette opération de permutation permettant de ramener au sommet de la pile d'exécution les n valeurs à sauvegarder dans l'ensemble des nouveaux registres, et
•• à insérer antérieurement à l'instruction de rang i un ensemble d'instructions de sauvegarde store vers l'ensemble de nouveaux registres, et
•• à insérer postérieurement à l'instruction détectée de rang i un ensemble d'instructions de chargement load à partir de l'ensemble des nouveaux registres.

18. Procédé selon la revendication 16, **caractérisé en ce que** l'étape consistant à effectuer une réallocation des registres par détection des registres d'origine employés avec des types différents consiste :
- à déterminer les intervalles de durée de vie de chaque registre ;
- à déterminer le type de données principal de chaque intervalle de durée de vie, le type de données principal d'un intervalle de durée de vie j pour un registre r étant défini par la borne supérieure des types de données stockées dans ce registre r par les instructions de sauvegarde store appartenant à l'intervalle de durée de vie j ;
- à établir un graphe d'interférences entre les intervalles de durée de vie, ce graphe d'interférences consistant en un graphe non orienté dont chaque sommet est constitué par un intervalle de durée de vie et dont les arcs entre deux sommets j₁ et j₂ existent si un sommet contient une instruction de sauvegarde adressée au registre de l'autre sommet ou réciproquement ;
- à traduire l'unicité d'un type de donnée alloué à chaque registre dans le graphe d'interférences en ajoutant des arcs entre toute paire de sommets du graphe d'interférences tant que deux sommets d'une paire de sommets n'ont pas le même type de donnée principal associé ;
- à effectuer une instanciation du graphe d'interférences, par attribution à chaque intervalle de durée de vie d'un numéro de registre de telle manière qu'à deux intervalles de vie adjacents dans le graphe d'interférences soient attribués des numéros de registres différents.

19. Système embarqué reprogrammable par téléchargement de fragments de programmes, comportant au moins un microprocesseur, une mémoire vive, un module d'entrées/sorties, une mémoire non volatile reprogrammable électriquement et une mémoire permanente dans laquelle sont implantés un programme principal et une machine virtuelle permettant l'exécution du programme principal et d'au moins un fragment de programme par l'intermédiaire dudit microprocesseur, **caractérisé en ce que** ledit système embarqué comporte au moins un module de programme de gestion et de vérification d'un état vide de pile des types pour chaque instruction de branchement d'un fragment de programme téléchargé, ledit module de programme de gestion et de vérification étant implanté en mémoire permanente.

20. Système embarqué reprogrammable par téléchargement de fragments de programmes, comportant au moins un microprocesseur, une mémoire vive, un module d'entrées/sorties, une mémoire non volatile reprogrammable électriquement et une mémoire permanente dans laquelle sont implantés un programme principal et une machine virtuelle permettant l'exécution du programme principal et d'au moins un fragment de programme par l'intermédiaire dudit microprocesseur, **caractérisé en ce que** ledit système embarqué comporte au moins un module de programme de gestion et de vérification d'un fragment de programme téléchargé suivant le protocole de gestion d'un fragment de programme téléchargé selon l'une des revendications 1 à 3, ledit module de programme de gestion et de vérification étant implanté en mémoire permanente.

21. Système embarqué selon la revendication 20, **caractérisé en ce que** celui-ci comporte au moins un module de sous-programme de vérification d'un fragment de programme téléchargé, suivant le processus de vérification selon l'une des revendications 4 à 14.

22. Système de transformation d'un code objet d'un fragment de programme, dans lequel les opérandes de chaque instruction appartiennent aux types de données manipulées par cette instruction, la pile d'exécution ne présente pas de phénomène de débordement, pour chaque instruction de branchement le type de variables de pile au niveau de ce branchement est le même qu'au niveau des cibles de ce branchement et un opérande de type déterminé écrit dans un registre par une instruction de ce code objet est relu depuis ce même registre par une autre instruction de ce code objet avec le même type de donnée déterminé, en un code objet normalisé pour ce même fragment de programme dans lequel les opérandes de chaque instruction appartiennent aux types de données manipulées par cette instruction, la pile d'exécution ne présente pas de phénomène de débordement, la pile d'exécution est vide à chaque instruction de branchement et à chaque instruction de cible de branchement, un seul et même type de donnée étant alloué à un même registre dans tout ledit code objet normalisé, **caractérisé en ce que** ledit système de transformation comporte au moins, implanté en mémoire de travail d'un ordinateur de développement ou d'une station de travail, un module de programme de transformation de ce code objet en un code objet normalisé suivant le procédé selon l'une des revendications 15 à 18, ce qui permet d'engendrer un code objet normalisé pour ledit fragment de programme satisfaisant aux critères de vérification de ce fragment de programme téléchargé.

23. Un produit programme d'ordinateur chargeable directement dans la mémoire interne d'un système embarqué reprogrammable, tel qu'une carte à microprocesseur munie d'une mémoire réinscriptible, ce système embarqué permettant le téléchargement d'un fragment de programme constitué par un code objet, suite d'instructions, exécutable par le microprocesseur du système embarqué par l'intermédiaire d'une machine virtuelle munie d'une pile d'exécution et de registres ou variables locales manipulées par ces instructions et permettant d'interpréter ce code objet, ce produit programme d'ordinateur comprenant des portions de code objet pour l'exécution du protocole de gestion d'un fragment de programme téléchargé sur ce système embarqué selon l'une des revendications 1 à 3, lorsque ce système embarqué est interconnecté à un terminal et que ce programme est exécuté par le microprocesseur de ce système embarqué par l'intermédiaire de ladite machine virtuelle.

24. Un produit programme d'ordinateur chargeable directement dans la mémoire interne d'un système embarqué reprogrammable, tel qu'une carte à microprocesseur munie d'une mémoire réinscriptible, ce système embarqué permettant le téléchargement d'un fragment de programme constitué par un code objet, suite d'instructions, exécutable par le microprocesseur du système embarqué par l'intermédiaire d'une machine virtuelle munie d'une pile d'exécution et de registres d'opérandes manipulés par ces instructions et permettant d'interpréter ce code objet, ce produit programme d'ordinateur comprenant des portions de code objet pour l'exécution des étapes de vérification d'un fragment de programme téléchargé sur ce système embarqué selon l'une des revendications 4 à 14 lorsque ce système embarqué est interconnecté à un terminal et que ce programme est exécuté par le microprocesseur de ce système embarqué par l'intermédiaire de ladite machine virtuelle.

25. Un produit programme d'ordinateur comprenant des portions de code objet pour l'exécution des étapes du procédé de transformation d'un code objet d'un fragment de programme téléchargé en un code objet normalisé pour ce même fragment de programme selon l'une des revendications 15 à 18.

26. Un produit programme d'ordinateur enregistré sur un support utilisable dans un système embarqué reprogrammable, tel qu'une carte à microprocesseur. munie d'une mémoire réinscriptible, ce système embarqué permettant le téléchargement d'un fragment de programme constitué par un code objet, suite d'instructions, exécutable par le microprocesseur du système embarqué par l'intermédiaire d'une machine virtuelle munie d'une pile d'exécution et de registres ou variables locales manipulées par ces instructions et permettant d'interpréter ce code objet, ce produit programme d'ordinateur comprenant au moins :
- des moyens de programmes lisibles par le microprocesseur de ce système embarqué par l'intermédiaire de ladite machine virtuelle, pour commander l'exécution d'une procédure de gestion du téléchargement d'un fragment de programme téléchargé ;
- des moyens de programmes lisibles par le microprocesseur de ce système embarqué par l'intermédiaire de ladite machine virtuelle, pour commander l'exécution d'une procédure de vérification instruction par instruction d'un état vide de pile des types pour chaque instruction de branchement du code objet constitutif dudit fragment de programme ;
- des moyens de programmes lisibles par le microprocesseur de ce système embarqué par l'intermédiaire de ladite machine virtuelle pour commander l'exécution d'un fragment de programme téléchargé suite à ou en l'absence d'une transformation du code objet de ce fragment de programme en code objet normalisé pour ce même fragment de programme.

27. Un produit programme d'ordinateur selon la revendication 26, comprenant en outre des moyens de programmes lisibles par le microprocesseur de ce système embarqué par l'intermédiaire de ladite machine virtuelle pour commander l'inhibition de l'exécution, sur ledit système embarqué, dudit fragment de programme dans le cas d'une procédure de vérification non réussie de ce fragment de programme.

## Patentansprüche

1. Protokoll zur Verwaltung eines ferngeladenen Programmfragmentes auf einem mitführbaren umprogrammierbaren System wie etwa einer mit einem überschreibbaren Speicher ausgestatteten Mikroprozessorkarte, wobei das Programmfragment durch einen Objektcode gebildet ist, eine Folge von Anweisungen, die von dem Mikroprozessor des mitführbaren Systems über eine virtuelle Maschine ausführbar ist, die mit einem Ausführungs-Stack und von diesen Anweisungen manipulierten lokalen Registern oder Variablen ausgestattet ist und es erlaubt, diesen Objektcode zu interpretieren, wobei das mitführbare System mit einem Endgerät verbunden ist, **dadurch gekennzeichnet, dass** das Protokoll wenigstens darin beruht, an dem mitgeführten System:
a) einen Befehl zum Fernladen dieses Programmfragmentes zu erfassen; und bei positiver Antwort auf diesen in der Erfassung eines Fernladebefehles beruhenden Schrittes
b) den dieses Programmfragment bildenden Objektcode zu lesen und diesen Objektcode zeitweilig zu speichern;
c) den gesamten zeitweilig gespeicherten Objektcode Anweisung für Anweisung einem Überprüfungsprozess zu unterziehen, wobei dieser Überprüfungsprozess in wenigstens einem Schritt der Initialisierung des Stacks der Typen auf einen leeren Zustand und der Tabelle von Typen von Registern auf einen Typ, der die Schnittmenge aller Typen von Daten darstellt, was einen Zustand der virtuellen Maschine zu Beginn der Ausführung des zeitweilig gespeicherten Objektcodes darstellt, und in einer Folge von Überprüfungsschritten, Anweisung für Anweisung, durch Diskriminieren der Existenz, für jede laufende Anweisung, eines Zieles, eines Zieles einer Verzweigungsanweisung, eines Zieles eines Ausnahmeverwaltungsaufrufes oder eines Zieles eines Subroutinenaufrufes, und durch Überprüfung und Aktualisierung der Wirkung der laufenden Anweisung auf den Stack der Typen und die Tabelle der Registertypen beruht, und im Fall einer gelungenen Überprüfung des Objektcodes,
d) das ferngeladene Programmfragment in einem Verzeichnis von verfügbaren Programmfragmenten aufzuzeichnen, und im Fall einer nicht gelungenen Überprüfung des Objektcodes
e) die Ausführung des Programmfragmentes auf dem mitführbaren System zu sperren.

2. Protokoll nach Anspruch 1, **dadurch gekennzeichnet, dass** der Schritt e) des Sperrens der Ausführung darin beruht,
f) das momentan aufgezeichnete Programmfragment zu löschen, ohne Letzteres in dem Verzeichnis von verfügbaren Programmfragmenten aufzuzeichnen, und
g) einen Fehlercode an die Leseeinrichtung zu senden.

3. Protokoll nach Anspruch 1 oder 2, **dadurch gekennzeichnet, dass** bei negativer Antwort auf den Schritt a), der in der Erfassung eines Fernladebefehles beruht, es darin beruht,
b') einen Befehl zur Auswahl eines in einem Verzeichnis von Programmfragmenten verfügbaren Programmfragments zu erfassen, und bei positiver Antwort auf diesen in der Erfassung eines Befehles zur Auswahl eines verfügbaren Programmfragmentes beruhenden Schritt
c') das ausgewählte verfügbare Programmfragment aufzurufen;
d') das aufgerufene verfügbare Programmfragment über die virtuelle Maschine in Abwesenheit jeglicher dynamischer Überprüfung von Variablentypen, von Zugriffsrechten auf die von dem aufgerufenen verfügbaren Programmfragment manipulierten Objekte, des Überlaufens des Ausführungsstacks bei der Aüsführung jeder Anweisung auszuführen, und bei negativer Antwort auf diesen in der Erfassung eines Befehles zur Auswahl eines verfügbaren Programmfragmentes beruhenden Schritt
e') zur Verarbeitung der Standardbefehle des mitführbaren Systems überzugehen.

4. Verfahren zur Überprüfung eines ferngeladenen Programmfragmentes auf einem umprogrammierbaren mitführbaren System wie etwa einer mit einem überschreibbaren Speicher ausgestatteten Mikroprozessorkarte, wobei das Programmfragment durch einen Objektcode gebildet ist und wenigstens ein Unterprogramm, eine Folge von Anweisungen, umfasst, die von dem Mikroprozessor des mitführbaren Systems über eine virtuelle Maschine ausführbar sind, die mit einem Ausführungsstack und mit von diesen Anweisungen manipulierten Operandenregistern ausgestattet ist und es erlaubt, diesen Objektcode zu interpretieren, wobei das mitgeführte System mit einer Leseeinrichtung verbunden ist, **dadurch gekennzeichnet, dass** das Verfahren darin beruht, nach der Erfassung eines Fernladebefehles und der Speicherung des dieses Programmfragment bildenden Objektcodes in dem überschreibbaren Speicher für jedes Unterprogramm:
α) einen Schritt der Initialisierung des Typenstacks auf einen leeren Zustand und der Tabelle der Registertypen auf einen Typ, der die Schnittmenge aller Datentypen darstellt, durchzuführen, was den Zustand der virtuellen Maschine zu Beginn der Ausführung des zeitweilig gespeicherten Objektcodes darstellt;
β) eine Überprüfung des zeitweilig gespeicherten Objektcodes, Anweisung für Anweisung, durch Diskriminierung des Vorhandenseins, für jede laufende Anweisung, eines Zieles, eines Zieles einer Verzweigungsanweisung, eines Zieles eines Ausnahmeverwaltungsaufrufes oder eines Zieles eines Subroutinenaufrufes, durchzuführen,
γ) eine Überprüfung und eine Aktualisierung der Wirkung der laufenden Anweisung auf die Datentypen des Typenstapels und die Tabelle von Registertypen in Abhängigkeit vom Vorhandensein eines Verzweigungsanweisungszieles, eines Subroutinenaufrufzieles oder eines Ausnahmeverwaltungsaufrufzieles durchzuführen, wobei die Überprüfung gelungen ist, wenn die Tabelle der Registertypen im Laufe einer Überprüfung aller Anweisungen nicht verändert wird, und der Überprüfungsprozess Anweisung für Anweisung fortgesetzt wird, bis die Tabelle der Registertypen stabil und frei von Modifikation ist, und der Überprüfungsprozess anderenfalls abgebrochen wird.

5. Überprüfungsverfahren nach Anspruch 4, **dadurch gekennzeichnet, dass** die Typen von im Laufe des Überprüfungsprozesses manipulierten Variablen wenigstens umfassen:
- Klassenidentifikatoren, die den in dem Programmfragment definierten Klassen von Objekten entsprechen;
- numerische Variablentypen, die wenigstens einen Typ short, eine auf p Bits codierte ganze Zahl, und einen Typ retaddr einer Rückkehradresse einer Sprunganweisung JSR umfassen;
- einen Typ null, der sich auf ungültige Objektverweise bezieht;
- einen auf Objekte bezogenen Typ object;
- einen ersten spezifischen Typ ⊥, der die Schnittmenge aller Typen darstellt und dem Wert Null, nil, entspricht;
- einen zweiten spezifischen Typ T, der die Vereinigungsmenge aller Typen darstellt und jedem Typ von Wert entspricht.

6. Verfahren nach Anspruch 5, **dadurch gekennzeichnet, dass** die Menge der Variablentypen eine Untertypisierungsbeziehung erfüllt:
object ∈ T;
short, retaddr ∈ T;
⊥ ∈ null, short, retaddr.

7. Verfahren nach einem der Ansprüche 4 bis 6, **dadurch gekennzeichnet, dass** wenn die laufende Anweisung Ziel einer Verzweigungsanweisung ist, das Überprüfungsverfahren darin beruht, zu überprüfen, dass der Typenstack leer ist, und dass im Fall einer positiven Überprüfung der Überprüfungsprozess für die nächste Anweisung fortgesetzt wird und anderenfalls der Überprüfungsprozess scheitert und das Programmfragment zurückgewiesen wird.

8. Verfahren nach einem der Ansprüche 4 bis 7, **dadurch gekennzeichnet, dass** wenn die laufende Anweisung Ziel eines Subroutinenaufrufes ist, der Überprüfungsprozess überprüft, dass die vorhergehende Anweisung eine unbedingte Verzweigung, eine Subroutinenrückkehr oder eine Ausnahmeaufhebung darstellt, und dass im Fall einer positiven Überprüfung der Überprüfungsprozess eine Reaktualisierung des Stacks von Variablentypen durch eine Einheit vom Typ retaddr, eine Subroutinen-Rückkehradresse, vornimmt, und dass anderenfalls der Überprüfungsprozess scheitert und das Programmfragment zurückgewiesen wird.

9. Verfahren nach einem der Ansprüche 4 bis 8, **dadurch gekennzeichnet, dass** wenn die laufende Anweisung Ziel einer Ausnahmeverwaltung ist, der Überprüfungsprozess überprüft, dass die vorhergehende Anweisung eine unbedingte Verzweigung, eine Subroutinen-Rückkehr oder eine Ausnahmeaufhebung darstellt, und dass bei positiver Überprüfung der Überprüfungsprozess eine Reaktualisierung des Stacks der Typen durch einen Eintrag vom Typ der Ausnahmen vornimmt und dass anderenfalls der Überprüfungsprozess scheitert und das Programmfragment zurückgewiesen wird.

10. Verfahren nach einem der Ansprüche 4 bis 9, **dadurch gekennzeichnet, dass** wenn die laufende Anweisung Ziel einer Mehrzahl von inkompatiblen Verzweigungen ist, der Überprüfungsprozess scheitert und das Programmfragment zurückgewiesen wird.

11. Verfahren nach einem der Ansprüche 4 bis 10, **dadurch gekennzeichnet, dass** wenn die laufende Anweisung Ziel keiner Verzweigung ist, der Überprüfungsprozess durch Übergehen zu einer Reaktualisierung des Typenstapels fortgesetzt wird.

12. Verfahren nach einem der Ansprüche 4 bis 11, **dadurch gekennzeichnet, dass** der Schritt des Überprüfens der Wirkung der laufenden Anweisung auf den Typenstack wenigstens umfasst:
- einen Schritt des Überprüfens, dass der Typenausführungsstack wenigstens genausoviel Eintragungen aufweist, wie die laufende Anweisung Operanden hat;
- einen Schritt der Entnahme vom Stack und der Überprüfung, dass die Typen der Eintragungen an der Spitze des Stacks Untertypen der Typen von Operanden dieser Anweisung sind;
- einen Schritt der Überprüfung des Vorhandenseins eines ausreichenden Speicherraumes auf dem Typenstack, um die Ergebnisse der laufenden Anweisung auf den Stack legen zu können;
- einen Schritt des Legens der diesen Ergebnissen zugeordneten Datentypen auf den Stack.

13. Verfahren nach Anspruch 12, **dadurch gekennzeichnet, dass** wenn die laufende Anweisung eine Anweisung zum Lesen eines Registers mit Adresse n ist, der Überprüfungsprozess darin beruht,
- den Datentyp des Ergebnisses dieses Lesens durch Abfragen des Eintrages n der Tabelle der Registertypen zu überprüfen;
- die Wirkung der laufenden Anweisung auf den Typenstack durch Entnahme der den Operanden dieser laufenden Anweisung entsprechenden Einträge vom Stack und Legen des Datentyps dieses Ergebnisses auf den Stack zu bestimmen.

14. Verfahren nach Anspruch 12, **dadurch gekennzeichnet, dass**, wenn die laufende Anweisung eine Anweisung zum Schreiben eines Registers mit Adresse m ist, der Überprüfungsprozess darin beruht,
- die Wirkung der laufenden Anweisung auf den Typenstack und den Typ t des in dieses Register mit Adresse m geschriebenen Operanden zu bestimmen;
- die Eintragung des Typs von der Tabelle der Registertypen an der Adresse m durch denjenigen Typ zu ersetzen, der unmittelbar höher als der zuvor gespeicherte Typ und der Typ t des in dieses Register mit Adresse m geschriebenen Operanden ist.

15. Verfahren zur Umwandlung eines Objektcodes eines Programmfragmentes, bei dem die Operanden jeder Anweisung zu den von dieser Anweisung manipulierten Datentypen gehören, der Ausführungsstack kein Überlaufen zeigt, für jede Verzweigungsanweisung der Stack-Variablentyp in Höhe dieser Verzweigung der gleiche ist wie in Höhe der Ziele dieser Verzweigung, in einen normierten Objektcode für dieses gleiche Programmfragment, bei dem die Operanden jeder Anweisung zu den von dieser Anweisung manipulierten Datentypen gehören, der Ausführungsstack kein Überlaufen zeigt, der Ausführungsstack bei jeder Verzweigungsanweisung und jeder Verzweigungszielanweisung leer ist, **dadurch gekennzeichnet, dass** das Verfahren darin beruht, für die Menge der Anweisungen des Objektcodes
- jede laufende Anweisung mit dem Datentyp des Stacks vor und nach Ausführung dieser Anweisung zu kommentieren, wobei die Kommentierungsdaten mit Hilfe einer Analyse des auf diese Anweisung bezogenen Datenstroms berechnet werden;
- in den Anweisungen und jeder laufenden Anweisung das Vorhandensein von Verzweigungen bzw. von Verzweigungszielen zu erfassen, für die der Ausführungsstack nicht leer ist, wobei die Erfassungsoperation ausgehend von den jeder laufenden Anweisung zugeteilten Stackvariablentyp-Kommentierungsdaten durchgeführt wird, und bei Erfassung eines nicht leeren Ausführungsstacks
- Stack-Variablentransfer-Anweisungen jeweils beiderseits dieser Verzweigungen bzw. dieser Verzweigungsziele einzufügen, um den Inhalt des Ausführungsstacks vor dem Verzweigen in zeitweilige Register zu entleeren und den Ausführungsstack anhand dieser zeitweiligen Register nach der Verzweigung wiederherzustellen, und anderenfalls keine Transferanweisung einzufügen, wodurch ein normierter Objektcode für dieses gleiche Programmfragment erhalten wird, bei dem der Ausführungsstack bei jeder Verzweigungsanweisung und jeder Verzweigungszielanweisung bei Nichtvorhandensein einer Modifikation der Ausführung des Programmfragmentes leer ist.

16. Verfahren zur Umwandlung eines Objektcodes eines Programmfragmentes, in dem die Operanden jeder Anweisung zu den von dieser Anweisung manipulierten Datentypen gehören und ein von einer Anweisung dieses Objektcodes in ein Register geschriebener Operand von festgelegtem Typ aus diesem gleichen Register von einer anderen Anweisung dieses Objektcodes mit dem gleichen festgelegten Datentyp gelesen wird, in einen normierten Objektcode für dieses gleiche Programmfragment, bei dem die Operanden jeder Anweisung zu den von dieser Anweisung manipulierten Datentypen gehören, wobei ein einziger, gleicher Datentyp einem gleichen Register in dem gesamten normierten Objektcode zugeordnet ist, **dadurch gekennzeichnet, dass** das Verfahren darin beruht, für die Menge der Anweisungen dieses Objektcodes:
- jede laufende Anweisung mit dem Datentyp der Register vor und nach Ausführung dieser Anweisung zu kommentieren, wobei die Kommentierungsdaten mit Hilfe einer Analyse des diese Anweisung betreffenden Datenstroms berechnet werden;
- eine Neuzuteilung der Register durch Erfassen der mit verschiedenen Typen verwendeten Ursprungsregister, Aufteilen dieser Ursprungsregister auf unterschiedliche normierte Register, ein normiertes Register für jeden verwendeten Datentyp, und eine Reaktualisierung der Anweisungen durchzuführen, die die Operanden manipulieren, die auf diese normierten Register zugreifen.

17. Verfahren nach Anspruch 15, **dadurch gekennzeichnet, dass** der Schritt, der darin beruht, in den Anweisungen und jeder laufenden Anweisung das Vorhandensein von Verzweigungen bzw. von Verzweigungszielen zu erfassen, für die der Ausführungsstack nicht leer ist, nach der Erfassung jeder Anweisung von entsprechendem Rang i darin beruht,
- jeder Anweisung von Rang i eine Menge von neuen Registern zuzuordnen, wobei in Höhe dieser Anweisung jeder aktiven Stackvariable ein neues Register zugeordnet wird;
- jede erfasste Anweisung vom Rang i zu untersuchen und das Vorhandensein eines Verzweigungszieles bzw. einer Verzweigung zu diskriminieren und in dem Fall, wo die Anweisung vom Rang i ein Verzweigungsziel ist und der Ausführungsstack in Höhe dieser Anweisung nicht leer ist,
• für jede vorhergehende Anweisung vom Rang i-1, die durch eine Verzweigung, eine Ausnahmeaufhebung oder eine Programmrückkehr gebildet ist, wenn die erfasste Anweisung vom Rang i nur durch eine Verzweigung zugänglich ist,
•• eine Menge von load-Anweisungen ausgehend von der Menge von neuen Registern vor die erfasste Anweisung vom Rang i einzufügen, wobei alle Verzweigungen zu der erfassten Anweisung vom Rang i auf die erste eingefügte Ladeeinweisung load umgeleitet werden, und
• für jede die Folge fortsetzende vorhergehende Anweisung vom Rang i-1, wenn die erfasste Anweisung vom Rang i sowohl über eine Verzweigung als auch über die vorhergehende Anweisung vom Rang i-1 erreichbar ist,
•• eine Menge von Speicheroperationen store in die Menge von neuen Registern vor die erfasste Anweisung vom Rang i und eine Menge von Ladebefehlen load ausgehend von dieser Menge von neuen Registern einzufügen, wobei alle Verzweigungen zu der erfassten Anweisung vom Rang i auf die erste eingefügte Ladeanweisung load umgeleitet werden, und in dem Fall, wo die erfasste Anweisung vom Rang i eine Verzweigung zu einer festgelegten Anweisung ist, und
• für jede erfasste Anweisung vom Rang i, die durch eine unbedingte Verzweigung gebildet ist,
•• vor diese erfasste Anweisung vom Rang i eine Mehrzahl von Speicheranweisungen store einzufügen, wobei jedem neuen Register eine Speicheranweisung zugeordnet ist; und
• für jede erfasste Anweisung vom Rang i, die durch eine bedingte Verzweigung gebildet ist, und für eine Zahl m > 0 von durch diese bedingte Verzweigungsanweisung manipulierten Operanden,
•• vor diese erfasste Anweisung vom Rang i eine Permutationsanweisung swap-x an der Spitze des Ausführungsstacks der m Operanden der erfassten Anweisung vom Rang i und der n folgenden Werte einzufügen, wobei diese Permutationsoperation es erlaubt, die n in der Menge von neuen Registern zu speichernden Werte an die Spitze des Ausführungsstacks zurückzubringen, und
•• vor die Anweisung vom Rang i eine Menge von Speicheroperationen store zum Speichern in der Menge der neuen Register einzufügen und
•• nach der erfassten Anweisung vom Rang i eine Menge von Ladeanweisungen load zum Laden aus der Menge von neuen Registern einzufügen.

18. Verfahren nach Anspruch 16, **dadurch gekennzeichnet, dass** der Schritt, der darin beruht, eine Neuzuweisung der Register durch Erfassen der mit den verschiedenen.Typen verwendeten ursprünglichen Register vorzunehmen, darin beruht,
- die Lebensdauerintervalle jedes Registers zu bestimmen;
- den Hauptdatentyp jedes Lebensdauerintervalls zu bestimmen, wobei der Hauptdatentyp eines Lebensdauerintervalls j für ein Register r definiert ist durch die obere Grenze der in diesem Register r von den zu dem Lebensdauerintervall j gehörenden Speicheroperationen store gespeicherten Datentypen;
- einen Graph von Interferenzen zwischen den Lebensdauerintervallen aufzustellen, wobei dieser Graph von Interferenzen aus einem nicht-orientierten Graphen besteht, von dem jeder Knoten durch ein Lebensdauerintervall gebildet ist, und dessen Kanten zwischen zwei Knoten j₁ und j₂ existieren, wenn ein Knoten eine an das Register des anderen Knotens adressierte Speicheroperation enthält oder umgekehrt;
- die Eindeutigkeit eines jedem Register zugeordneten Datentyps in dem Interferenzgraphen zu übersetzen durch Einfügen von Kanten zwischen jedem Knotenpaar des Interferenzgraphen, so lange nicht zwei Knoten eines Paares von Knoten den gleichen zugeordneten Hauptdatentyp haben;
- eine Instanzierung des Interferenzgraphen durch Zuweisen einer Registernummer zu jedem Lebensdauerintervall derart durchzuführen, dass zwei in dem Interferenzgraphen benachbarten Lebensdauerintervallen unterschiedliche Registernummern zugeordnet werden.

19. Mitführbares, durch Fernladen von Programmfragmenten umprogrammierbares System mit wenigstens einem Mikroprozessor, einem Schreib-Lesespeicher, einem Ein-/Ausgabemodul, einem elektrisch umprogrammierbaren nicht-flüchtigen Speicher und einem permanenten Speicher, in dem ein Hauptprogramm und eine virtuelle Maschine abgelegt sind, die die Ausführung des Hauptprogramms und wenigstens eines Programmfragmentes über den Mikroprozessor ermöglicht, **dadurch gekennzeichnet, dass** das mitführbare System wenigstens ein Programmmodul zur Verwaltung und Überprüfung eines leeren Zustandes eines Typenstacks für jede Verzweigungsanweisung eines ferngeladenen Programmfragmentes umfasst, wobei das Programm zur Verwaltung und Überprüfung im permanenten Speicher abgelegt ist.

20. Mitführbares, durch Fernladen von Programmfragmenten umprogrammierbares System mit wenigstens einem Mikroprozessor, einem Schreib-Lesespeicher, einem Ein-/Ausgabemodul, einem elektrisch umprogrammierbaren nicht-flüchtigen Speicher und einem permanenten Speicher, in dem ein Hauptprogramm und eine virtuelle Maschine abgelegt sind, die die Ausführung des Hauptprogramms und wenigstens eines Programmfragmentes über den Mikroprozessor ermöglicht, **dadurch gekennzeichnet, dass** das mitführbare System wenigstens ein Programm zur Verwaltung und Überprüfung nach dem Protokoll zur Verwaltung eines ferngeladenen Programmfragmentes nach einem der Ansprüche 1 bis 3 umfasst, wobei das Verwaltungs- und Überprüfungs-Programmmodul im permanenten Speicher abgelegt sind.

21. Mitführbares System nach Anspruch 20, **dadurch gekennzeichnet, dass** es wenigstens ein Unterprogrammmodul zur Überprüfung eines ferngeladenen Programmfragmentes nach dem Überprüfungsprozess nach einem der Ansprüche 4 bis 14 umfasst.

22. System zur Umwandlung eines Objektcodes eines Programmfragmentes, in dem die Operanden jeder Anweisung zu den von dieser Anweisung manipulierten Datentypen gehören, der Ausführungsstack kein Überlaufen aufweist, für jede Verzweigungsanweisung der Stack-Variablentyp in Höhe dieser Verzweigung der gleiche wie in Höhe der Ziele dieser Verzweigung ist, und ein durch eine Anweisung dieses Objektcodes in ein Register geschriebener Operand von festgelegtem Typ aus diesem gleichen Register von einer anderen Anweisung dieses Objektcodes mit dem gleichen festgelegten Datentyp erneut gelesen wird, in einen normierten Objektcode für dieses gleiche Programmfragment, in welchem die Operanden jeder Anweisung zu den von dieser Anweisung manipulierten Datentypen gehören, der Ausführungsstack kein Überlaufen aufweist, der Ausführungsstack bei jeder Verzweigungsanweisung und jeder Verzweigungszielanweisung leer ist, ein einziger, gleicher Datentyp einem gleichen Register in dem gesamten normierten Objektcode zugewiesen ist, **dadurch gekennzeichnet, dass** das Umwandlungssystem wenigstens, abgelegt im Arbeitsspeicher eines Entwicklungscomputers oder einer Workstation, ein Programmmodul zur Umwandlung dieses Objektcodes in einen normierten Objektcode nach dem Verfahren gemäß einem der Ansprüche 15 bis 18 umfasst, was es erlaubt, einen normierten Objektcode für das Programmfragment zu erzeugen, der den Kriterien zur Überprüfung dieses ferngeladenen Programmfragmentes genügt.

23. Direkt in den internen Speicher eines mitführbaren, umprogrammierbaren Systems wie etwa einer mit einem überschreibbaren Speicher ausgestatteten Mikroprozessorkarte ladbares Computerprogrammprodukt, wobei dieses mitführbare System das Fernladen eines Programmfragmentes erlaubt, das durch einen Objektcode gebildet ist, eine Folge von Anweisungen, die von dem Mikroprozessor des mitführbaren Systems über eine virtuelle Maschine ausführbar ist, die mit einem Ausführungsstack und mit von diesen Anweisungen manipulierten lokalen Registern oder Variablen ausgestattet ist und die es erlaubt, diesen Objektcode zu interpretieren, wobei dieses Computerprogrammprodukt Objektcodeabschnitte für die Ausführung des Protokolls zur Verwaltung eines ferngeladenen Programmfragmentes auf dem mitführbaren System nach einem der Ansprüche 1 bis 3 aufweist, wenn dieses mitführbare System mit einem Endgerät verbunden ist, und das Programm von dem Mikroprozessor dieses mitführbaren Systems über die virtuelle Maschine ausgeführt wird.

24. Direkt in den internen Speicher eines mitführbaren umprogrammierbaren Systems wie etwa einer mit einem überschreibbaren Speicher ausgestatteten Mikroprozessorkarte ladbares Computerprogrammprodukt, wobei dieses mitführbare System das Fernladen eines Programmfragmentes erlaubt, das durch einen Objektcode gebildet ist, eine Folge von Anweisungen, die von dem Mikroprozessor des mitführbaren Systems über eine virtuelle Maschine ausführbar sind, die mit einem Ausführungsstack und mit von diesen Anweisungen manipulierten Operandenregistern ausgestattet sind und die es erlaubt, diesen Objektcode zu interpretieren, wobei dieses Computerprogrammprodukt Objektcodeabschnitte zur Ausführung der Schritte zur Überprüfung eines ferngeladenen Programmfragmentes auf dem mitführbaren System nach einem der Ansprüche 4 bis 14 umfasst, wenn das mitführbare System mit einem Endgerät verbunden ist, und das Programm von dem Mikroprozessor dieses mitführbaren Systems über die virtuelle Maschine ausgeführt wird.

25. Computerprogrammprodukt mit Objektcodeabschnitten zur Ausführung der Schritte des Verfahrens zur Umwandlung eines Objektcodes eines ferngeladenen Programmfragmentes in einen normierten Objektcode für dieses gleiche Programmfragment nach einem der Ansprüche 15 bis 18.

26. Computerprogrammprodukt, aufgezeichnet auf einem in einem umprogrammierbaren mitführbaren System verwendbaren Träger wie etwa einer mit einem überschreibbaren Speicher ausgestatteten Mikroprozessorkarte, wobei dieses mitführbare System das Fernladen eines Programmfragmentes erlaubt, das durch einen Objektcode gebildet ist, eine Folge von Anweisungen, die durch den Mikroprozessor des mitführbaren Systems über eine virtuelle Maschine ausführbar sind, die mit einem Ausführungsstack und mit von diesen Anweisungen manipulierten lokalen Registern oder Variablen ausgestattet ist, und die es erlaubt, diesen Objektcode zu interpretieren, wobei dieses Computerprogrammprodukt wenigstens umfasst:
- durch den Mikroprozessor dieses mitführbaren Systems über die virtuelle Maschine lesbare Programm-Mittel zum Steuern der Ausführung einer Prozedur zur Verwaltung des Fernladens eines ferngeladenen Programmfragmentes;
- durch den Mikroprozessor dieses mitführbaren Systems über die virtuelle Maschine lesbare Programm-Mittel zum Steuern der Ausführung einer Prozedur der Überprüfung, Anweisung für Anweisung, eines leeren Zustandes des Typenstacks für jede Verzweigungsanweisung des das Programmfragment bildenden Objektcodes;
- durch den Mikroprozessor dieses mitführbaren Systems über die virtuelle Maschine lesbare Programm-Mittel zum Steuern der Ausführung eines ferngeladenen Programmfragmentes nach einer oder in Abwesenheit einer Umwandlung des Objektcodes dieses Programmfragmentes in normierten Objektcode für dieses gleiche Programmfragment.

27. Computerprogrammprodukt nach Anspruch 26, ferner mit durch den Mikroprozessor dieses mitführbaren Systems über die virtuelle Maschine lesbaren Programm-Mitteln zum Steuern der Sperrung der Ausführung, in dem mitführbaren System, des Programmfragmentes im Fall einer misslungenen Überprüfungsprozedur dieses Programmfragmentes.

## Claims

1. A protocol for managing a program fragment downloaded onto a reprogrammable on-board system, such as a microprocessor card equipped with a rewritable memory, said program fragment consisting of an object code, a series of instructions, executable by the microprocessor of the on-board system by way of a virtual machine. equipped with an execution stack and with local variables or registers manipulated via these instructions and making it possible to interpret this object code, said on-board system being interconnected to a terminal, **characterized in that** this protocol consists at least, at the level of said on-board system:
a) in detecting a command for downloading of this program fragment; and, on a positive response to this stage consisting in detecting a downloading command,
b) in reading the object code constituting this program fragment and in temporarily storing this object code;
c) in subjecting the whole of the object code stored temporarily in memory to a verification process, instruction by instruction, this verification process consisting at least in a stage of initializing the type stack at an empty state and the table of register types at a type representing the intersection of all the data types, representing the state of said virtual machine at the start of the execution of the temporarily stored object code and in a succession of stages of verification, instruction by instruction, by discerning the existence, for each current instruction, of a target, branching-instruction target, target of an exception-handler call, or target of a subroutine call, and in a verification and an updating of the effect of said current instruction on the type stack and on the table of register types, and, in the event of a successful verification of said object code,
d) in recording the downloaded program fragment in a directory of available program fragments, and, in the event of an unsuccessful verification of said object code,
e) in inhibiting execution, on said on-board system, of said program fragment.

2. The protocol as claimed in claim 1, **characterized in that** said stage e) of inhibiting the execution consists:
f) in deleting the momentarily recorded program fragment, when omitting to record the latter in said directory of available program fragments, and
g) in sending an error code to said reader.

3. The protocol as claimed in claim 1 or 2, **characterized in that**, on a negative response to said stage a) consisting in detecting a downloading command, this consists:
b') in detecting a command to select an available program fragment from a directory of program fragments; and, on a positive response to this stage, consisting in detecting a command to select an available program fragment;
c') in calling said selected available program fragment;
d') in executing said called available program fragment via the virtual machine, with no dynamic verification of variable types, access rights to the objects which are manipulated by the called available program fragment, or overflow of the execution stack when each instruction is executed, and, on a negative response to this stage consisting in detecting a command to select an available program fragment,
e') in proceeding to process the standard commands of the on-board system.

4. A method of. verifying a program fragment downloaded onto a reprogrammable on-board system, such as a microprocessor card equipped with a rewritable memory, said program fragment consisting of an object code and including at least one subprogram, a series of instructions, by the microprocessor of the on-board system by way of a virtual machine equipped with an execution stack and with operand registers manipulated by these instructions, and making it possible to interpret this object code, said on-board system being interconnected to a reader, **characterized in that** said method, following the detection of a downloading command and the storage of said object code constituting this program fragment in said rewritable memory, consists, for each subprogram:
α) in carrying out a stage of initializing the type stack at an empty state and the table of register types at a type representing the intersection the intersection of all data types, representing the state of the virtual machine at the start of the execution of the temporarily stored object code;
β) in carrying out a verification of said temporarily stored object code instruction by instruction, by discerning the existence, for each current instruction, of a target, a branching-instruction target, a target of an exception-handler call or a target of a subroutine call;
γ) in carrying out a verification and an updating of the effect of said current instruction on the data types of said type stack and of said table of register types, on the basis of the existence of a branching-instruction target, of a target of a subroutine call or of a target of an exception-handler call, said verification being successful when the table of register types is not modified in the course of a verification of all the instructions, and the verification process being carried out instruction by instruction until the table of register types is stable, with no modification present, the verification process being interrupted otherwise.

5. The verification method as claimed in claim 4, **characterized in that** the variable types which are manipulated during the verification process include at least:
- class identifiers corresponding to object classes which are defined in the program fragment;
- numeric variable types including at least a type short, an integer coded on p bits, and a type retaddr for the return address of a jump instruction JSR;
- a type null relating to references of null objects;
- a type object relating to objects;
- a first specific type ⊥, representing the intersection of all the types and corresponding to the value 0, nil;
- a second specific type T, representing the union of all the types and corresponding to any type of value.

6. Method as claimed in claim 5, **characterized in that** all said variable types verify a subtyping relation:
object ∈ T;
short, retaddr ∈ T;
⊥ ∈ null, short, retaddr.

7. The method as claimed in one of claims 4 to 6, **characterized in that** when said current instruction is the target of a branching instruction, said verification method consists in verifying that the type stack is empty, the verification process being continued for the following instruction in the case of a positive verification, and the verification process failing and the program fragment being rejected otherwise.

8. The method as claimed in one of claims 4 to 7, **characterized in that** when said. current instruction is the target of a. subroutine call, said verification process verifies that the previous instruction is an unconditional branching, a subroutine return or a raising of an exception, said verification process, in the case of a positive verification, proceeding to reupdate the stack of variable types by an entity of retaddr type, the return address of the subroutine, and the verification process failing and the program fragment being rejected otherwise.

9. The method as claimed in one of claims 4 to 8, **characterized in that** when the current instruction is the target of an exception handler, said verification process verifies that the previous instruction is an unconditional branching, a subroutine return or a raising of an exception, said verification process, in the case of a positive verification, proceeding to reupdate the type stack by entering the exception type, and the verification process failing and the program fragment being rejected otherwise.

10. The method as claimed in one of claims 4 to 9, **characterized in that** when the current instruction is the target of multiple incompatible branchings, the verification process fails and the program fragment is rejected.

11. The method as claimed in one of claims 4 to 10, **characterized in that** when the current instruction is not the target of any branching, the verification process continues by passing to an update of the type stack.

12. The method as claimed in one of claims 4 to 11, **characterized in that** the stage of verification of the effect of the current instruction on the type stack includes, at least:
- a stage of verifying that the type execution stack includes at least as many entries as the current instruction includes operands;
- a stage of unstacking and of verifying that the types of the entries at the top of the stack are subtypes of the types of the operands of the operands of this instruction;
- a stage of verifying the existence of a sufficient memory space on the type stack to proceed to stack the results of the current instruction;
- a stage of stacking on the stack data types which are assigned to these results.

13. The method as claimed in claim 12, **characterized in that** when the current instruction is an instruction to read a register of address n, the verification process consists:
- in verifying the data type of the result of this reading, by reading the entry n in the table of register types;
- in determining the effect of the current instruction on the type stack by unstacking the entries of the stack corresponding to the operands of this current instruction and by stacking 'the data type of this result.

14. The method as claimed in claim 12, **characterized in that** when the current instruction is an instruction to write to a register of address m, the verification process consists:
- in determining the effect of the current instruction on the type stack and the type t of the operand which is written in this register of address m;
- in replacing the type entry of the table of register types at address m by the type immediately above the previously stored type and above the type t of the operand which is written in this register of address m.

15. A method of transforming an object code of a program fragment, in which the operands of each instruction belong to the data types manipulated by this instruction, the execution stack does not exhibit any overflow phenomenon, for each branching instruction, the type of the stack variables at this branching is the same as at the targets of this branching, into a standardized object code for this same program fragment, in which the operands of each instruction belong to the data types manipulated by this instruction, the execution stack does not exhibit any overflow phenomenon, the execution stack is empty at each branching instruction and at each branching-target instruction, **characterized in that** this method consists, for all the instructions of said object code:
- in annotating each current instruction with the data type of the stack before and after execution of this instruction, the annotation data being calculated by means of an analysis of the data stream relating to this instruction;
- in detecting, within said instructions and within each current instruction, the existence of branchings, or respectively of branching-targets, for which said execution stack is not empty, the detection operation being carried out on the basis of the annotation data of the type of stack variables allocated to each current instruction, and in the presence of detection of a non-empty execution stack,
- in inserting instructions to transfer stack variables on either side of these branchings or of these branching targets, respectively in order to empty the contents of the execution stack into temporary registers before this branching and to reestablish the execution stack from said temporary registers after this branching, and in not inserting any transfer instruction. otherwise, making it possible to obtain a standardized object code for this same program fragment, in which the execution stack is empty at each branching instruction and at each branching-target instruction, in the absence of any modification to the execution of said program fragment.

16. A method of transforming an object code of a program fragment, in which the 'operands. of each instruction belong to the data types manipulated by this instruction, and an operand of given type written into a register by an instruction of this object code is reread from this same register by another instruction of this object code with the same given data type, into a standardized object code for this same program fragment, in which the operands of each instruction belong to the data types manipulated by this instruction, the same data type being allocated to the same register throughout said standardized object code, **characterized in that** this method consists, for all the instructions of said object code:
- in annotating each current instruction with the data type of the registers before and after execution of this instruction, the annotation data being calculated by means of an analysis of the data stream relating to this instruction;
- in carrying out a reallocation of the registers, by detecting the original registers employed with different types, by dividing these original registers into separate standardized registers, one standardized register for each data type used, and reupdating the instructions which manipulate the operands which use said standardized registers.

17. The method as claimed in claim 15, **characterized in that** the. stage consisting in detecting, within said instructions and within each current instruction, the existence of branchings, or respectively of branching targets, for which the execution stack is not empty, consists, following detection of each corresponding instruction of rank i:
- in associating with each instruction of rank i a set of new registers, one new register being associated with each stack variable which is active at this instruction;
- in examining each detected instruction of rank i and in discerning the existence of a branching target or branching, respectively, and, in the case where the instruction of rank i is a branching target and that the execution stack at this instruction is not empty,
• for every preceding instruction, of rank i-1, consisting of a branching, a raising of an exception or a program return, the detected instruction of rank i being accessible only by a branching,
•• in inserting a set of load instructions load to load from the set of new registers before said detected instruction of rank i, with redirection of all branchings to the detected instruction of rank i to the first inserted load instruction load; and
• for every preceding instruction, of rank i-1, continuing in sequence, the detected instruction of rank i being accessible simultaneously by a branching and from the preceding instruction of rank i-1,
•• in inserting a set of backup instructions store to back up to the set of new registers before the detected instruction of rank i, and a set of load instructions load to load from this set of new registers, with redirection of all the branchings to the detected instruction of rank i to the first inserted load instruction load, and, in the case where said detected instruction of rank i is a branching to a given instruction,
• for every detected instruction of rank i consisting of an unconditional branching,
•• in inserting, before the detected instruction of rank i, multiple backup instructions store, a backup instruction being associated with each new register; and
• for every detected instruction of rank i consisting of a conditional branching, and for a number m > 0 of operands manipulated by this conditional branching instruction,
•• in inserting, before this detected instruction of rank i, a permutation instruction, swap-x, at the top of the execution stack of the m operands of the detected instruction of rank i and the n following values, this permutation operation making it possible to collect at the top of the execution stack the n values to be backed up in the set of new registers, and
•• in inserting, before the instruction of rank i, a set of backup instructions store to back up to the set of new registers, and
•• in inserting, after the detected instruction of rank i, a set of load instructions load to load from the set of new registers.

18. The method as claimed in claim 16, **characterized in that** the stage consisting in reallocating registers by detecting the original registers employed with different types consists:
- in determining the lifetime intervals of each register;
- in determining the main data type of each lifetime interval, the main data type of a lifetime interval j for a register r being defined by the upper bound of the data types stored in this register r by the backup instructions store belonging to the lifetime interval j;
- in establishing an interference graph between the lifetime intervals, this interference graph consisting of a non-oriented graph of which each peak consists of a lifetime interval, and of which the arcs between two peaks j₁ and j₂ exist if a peak contains a backup instruction addressed to the register of the other peak or vice versa;
- in translating the uniqueness of a data type which is allocated to each register in the interference graph, by adding arcs between all pairs of peaks of the interference graph while two peaks of a pair of peaks do not have the same associated main data type;
- in carrying out an instantiation of the interference graph, by assigning to each lifetime interval a register number, in such a way that different register numbers are assigned to two adjacent life intervals in the interference graph.

19. An on-board system which can be reprogrammed by downloading program fragments, including at least one microprocessor, one random-access memory, one input/output module, one electrically reprogrammable nonvolatile memory and one permanent memory, in which are installed a main program and a virtual machine which makes it possible to execute the main program and at least one program fragment using said microprocessor, **characterized in that** said on-board system includes at least one program module to manage and verify an empty state of types stack for each branching instruction of a downloaded program fragment, said management and verification program module being installed in the permanent memory.

20. An on-board system which can be reprogrammed by downloading program fragments,' including at least one microprocessor, one random-access memory, one input/output module, one electrically reprogrammable nonvolatile memory and one permanent memory, in which are installed a main program and a virtual machine which makes it possible to execute the main program and at least one program fragment using said microprocessor, **characterized in that** said on-board system includes at least one program module to manage and verify a downloaded program fragment in accordance with the protocol for managing a downloaded program fragment as claimed in one of claims 1 to 3, said management and verification program module being installed in the permanent memory.

21. The on-board system as claimed in claim 20, **characterized in that** it includes at least one subprogram module to verify a downloaded program fragment, in accordance with the verification process as claimed in one of claims 4 to 14.

22. A system for transforming an object code of a program fragment, in which the operands of each instruction belong to the data types manipulated by this instruction, the execution stack does not exhibit any overflow phenomenon, for each branching instruction, the type of stack variables at this branching is the same as at the targets of this branching, and an operand of given type written to a register by an instruction of this object code is reread from this same register by another instruction of this object code with the same given data type, into a standardized object code for this same program fragment, in which the operands of each instruction belong to the data types manipulated by this instruction, the execution stack does not exhibit overflow phenomenon, the execution stack is empty at each branching instruction and at each branching-target instruction, the same data type being assigned to the same register throughout said standardized object code, **characterized in that** said conversion system includes, at least, installed in the working memory of a development computer or workstation, a program module to transform this object code into a standardized object code in accordance with the method as claimed in one of claims 15 to 18, making it possible to generate a standardized object code for said program fragment, satisfying the criteria for verifying this downloaded program fragment.

23. A computer program product which can be loaded directly into the internal memory of a reprogrammable on-board system, such as a microprocessor card equipped with a rewritable memory, this on-board system making it possible to download a program fragment consisting of an object code, a series of instructions, executable by the microprocessor of the on-board system by way of a virtual machine equipped with an execution stack and with local variables or registers manipulated via these instructions and making it possible to interpret this object code, this computer program product including portions of object code to execute the protocol for managing a downloaded program fragment on this on-board system as claimed in one of claims 1 to 3, when this on-board system is interconnected to a terminal and this program is executed by the microprocessor of this on-board system by way of said virtual machine.

24. A computer program product which can be loaded directly into the internal memory of a reprogrammable on-board system, such as a microprocessor card equipped with a rewritable memory, this on-board system making it possible to download a program fragment consisting of an object code, a series of instructions, executable by the microprocessor of the on-board system by way of a virtual machine equipped with an execution stack and with operand registers manipulated via these instructions and making it possible to interpret this object code, this computer program product including portions of object code to execute the stages of verifying a program fragment downloaded onto this on-board system as claimed in one of claims 4 to 14, when this on-board system is interconnected to a terminal and this program is executed by the microprocessor of this on-board system by way of said virtual machine.

25. A computer program product including portions of object code to execute stages of the method of transforming an object code of a downloaded program fragment into a standardized object code for this same program fragment as claimed in one of claims 15 to 18.

26. A computer program product which is recorded on a medium which can be used in a reprogrammable on-board system; such as a microprocessor card equipped with a rewritable memory, this on-board system making it possible to download a program fragment consisting of an object code, a series of instructions, executable by the microprocessor of the on-board system by way of a virtual machine equipped with an execution stack and with local variables or registers manipulated via these instructions and making it possible to interpret this object code, this computer program product including, at least:
- program resources which can be read by the microprocessor of this on-board system via said virtual machine, to command execution of a procedure for managing the downloading of a downloaded program fragment;
- program resources which can be read by the microprocessor of this on-board system via said virtual machine, to command execution of a procedure for verifying, instruction by instruction, of an empty state of types stack for each branching instruction of the object code which makes up said program fragment;
- program resources which can be read by the microprocessor of this on-board system via said virtual machine, to command execution of a downloaded program fragment following or in the absence of a conversion of the object code of this program fragment into a standardized object code for this same program fragment.

27. The computer program product as claimed in claim 26, additionally including program resources which can be read by the microprocessor of this on-board system via said virtual machine, to command inhibition of execution, on said on-board system, of said program fragment in the case of an unsuccessful verification procedure of this program fragment.
